# EUROPEAN PATENT APPLICATION

(11) **EP 4 354 999 A1**
(43) Date of publication of application: **17.04.2024**
(21) Application number: 22848333.5
(22) Date of filing: 19.07.2022
(51) Int. Cl.: H04W 72/04

(54) **COMMUNICATION METHOD, APPARATUS, AND SYSTEM**

(30) Priority: 27.07.2021 CN 202110849170
(71) Applicant: Huawei Technologies Co., Ltd., Shenzhen, Guangdong 518129 (CN)
(72) Inventor: JIANG, Chengkun, Shenzhen, Guangdong 518129 (CN); LI, Hancheng, Shenzhen, Guangdong 518129 (CN); ZHOU, Han, Shenzhen, Guangdong 518129 (CN)
(74) Representative: Pfenning, Meinig & Partner mbB
(86) International application number: PCT/CN2022/106422
(87) International publication number: WO 2023/005728

(57) **Abstract**

Embodiments of this application provide a communication method, apparatus, and system. The method includes: A first device receives first information from a session management network element, where the first information indicates that a first time interval between a sending time point of a first uplink service flow of a first terminal device and a sending time point of a second uplink service flow of a second terminal device is less than a first threshold. After determining a first sending time point of the first uplink service flow of the first terminal device, the first device adjusts the first sending time point to a second sending time point, and sends the second sending time point to the session management network element, where a second time interval between the second sending time point and the sending time point of the second uplink service flow of the second terminal device is greater than or equal to the first threshold. According to the method, the first device increases the time interval between the sending time point of the first uplink service flow and the sending time point of the second uplink service flow, to resolve a problem of a conflict between different service flows, and ensure a delay certainty of a deterministic service.

## Description

### CROSS-REFERENCE TO RELATED APPLICATIONS

This application claims priority to Chinese Patent Application No. 202110849170.7, filed with the China National Intellectual Property Administration on July 27, 2021 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

Currently, for a deterministic service flow, the 3rd generation partnership project (3rd generation partnership project, 3GPP) defines that an application function (application function, AF) network element obtains a characteristic of the deterministic service flow, encapsulates the characteristic of the deterministic service flow into time sensitive communication assistance information ((time sensitive communication, TSC) assistance information, TSCAI), and sends the TSCAI to an access network device. The TSCAI may include a service flow direction (an uplink service flow/a downlink service flow), a service flow transmission periodicity, and a service flow arrival time point (that is, a time point at which the downlink service flow arrives at the access network device through an N3 interface, or a time point at which the uplink service flow is sent from a terminal device). Based on the TSCAI, the access network device may know an arrival time point of each service flow, and then schedule the service flow (that is, allocate a resource to the service flow) based on a capability of the access network device, to ensure determined quality of service (quality of service, QoS).

However, when service flow arrival time points of uplink service flows of a plurality of terminal devices are the same or a time interval of the service flow arrival time points is less than a specific threshold, to be specific, a time interval of sending the service flows by the plurality of terminal devices is less than a preset threshold, an air interface scheduling conflict of the access network device may be caused. In other words, the access network device cannot allocate resources to the service flows of the plurality of the terminal devices simultaneously. Consequently, a delay of an uplink service flow of a terminal device in an air interface scheduling phase is increased, and this causes a delay uncertainty, affects service performance, and even causes a packet loss on the air interface and service interruption.

### SUMMARY

This application provides a communication method, apparatus, and system, to resolve an air interface scheduling conflict of an access network device, ensure a delay certainty of a deterministic service, and improve service performance.

According to a first aspect, this application provides a communication method. The method may include: A first device receives first information from a session management network element, where the first information indicates that a first time interval between a sending time point of a first uplink service flow of a first terminal device and a sending time point of a second uplink service flow of a second terminal device is less than a first threshold. The first device determines a first sending time point of the first uplink service flow of the first terminal device, and adjusts the first sending time point to a second sending time point, where a second time interval between the second sending time point and the sending time point of the second uplink service flow of the second terminal device is greater than or equal to the first threshold. Then, the first device sends the second sending time point to the session management network element.

According to the foregoing method, the first sending time point of the first uplink service flow of the first terminal device is adjusted, to increase the time interval between the sending time point of the first uplink service flow and the sending time point of the second uplink service flow. In this way, a first access network device accessed by the first terminal device may allocate a resource to the first uplink service flow of the first terminal device, so that the first uplink service flow is successfully sent, to avoid a conflict between the first uplink service flow and another service flow, ensure a delay certainty of the first uplink service flow, and improve service performance.

In a possible implementation, a specific method for determining, by the first device, the first sending time point of the first uplink service flow of the first terminal device may be: The first device queries for characteristic information of the first uplink service flow from a unified data management network element based on the first information, where the characteristic information of the first uplink service flow includes the first sending time point. In this way, the first device may accurately obtain the first sending time point based on the characteristic information that is of the first uplink service flow and that is queried from the unified data management network element.

In a possible implementation, the first information includes an identifier of the first terminal device, or includes an identifier of the first terminal device and an identifier of the first uplink service flow, or includes an identifier of the first terminal device and an identifier of the first access network device, or includes an identifier of the first terminal device, an identifier of the first uplink service flow, and an identifier of the first access network device. In this way, the first device may accurately query for the characteristic information of the first uplink service flow based on information in the first information.

In a possible implementation, a specific method for adjusting, by the first device, the first sending time point to the second sending time point may be: The first device determines characteristic information of the second uplink service flow, and the first device adjusts the first sending time point to the second sending time point based on the characteristic information of the second uplink service flow. In this way, the first device may determine that the second sending time point does not conflict with the sending time point of the second uplink service flow, so that the first terminal device may subsequently send the first uplink service flow successfully.

In a possible implementation, the characteristic information of the second uplink service flow includes at least one of the sending time point of the second uplink service flow, a data size of the second uplink service flow, or a sending periodicity of the second uplink service flow. In this way, the first device may accurately calculate the second sending time point with reference to the characteristic information of the second uplink service flow.

In a possible implementation, a specific method for determining, by the first device, the characteristic information of the second uplink service flow may be: The first device obtains the characteristic information of the first uplink service flow, where the characteristic information of the first uplink service flow includes at least one of the first sending time point, a data size of the first uplink service flow, or a sending periodicity of the first uplink service flow; and the first device determines the characteristic information of the second uplink service flow based on the characteristic information of the first uplink service flow. In this way, the first device may accurately determine the characteristic information of the second uplink service flow that has a scheduling conflict with the first uplink service flow.

In a possible implementation, a specific method for determining, by the first device, the characteristic information of the second uplink service flow may be: The first information includes an identifier of the second terminal device, and the first device determines the characteristic information of the second uplink service flow based on the first information. In this way, the first device may accurately determine the second uplink service flow based on the identifier of the second terminal device, and then determine the characteristic information of the second uplink service flow.

In a possible implementation, the first information further includes an identifier of the second uplink service flow. In this way, the first device may accurately determine the characteristic information of the second uplink service flow based on the identifier of the second terminal device and the identifier of the second uplink service flow.

In a possible implementation, a specific method for adjusting, by the first device, the first sending time point to the second sending time point based on the characteristic information of the second uplink service flow may be: The first device calculates the second sending time point based on the characteristic information of the first uplink service flow and the characteristic information of the second uplink service flow, and the first device adjusts the first sending time point to the second sending time point. In this way, the first device may accurately calculate the second sending time point.

In a possible implementation, the first device determines a third time interval between the first sending time point and the second sending time point, where in other words, the third time interval is a difference between the first sending time point and the second sending time point; and the first device determines a second packet delay budget PDB of the first uplink service flow based on the third time interval. In this way, an end-to-end delay can be ensured.

In a possible implementation, a specific method for determining, by the first device, the second PDB of the first uplink service flow based on the third time interval may be: The first device subtracts the third time interval from a first PDB of the first uplink service flow, to obtain the second PDB. In this way, the end-to-end delay can be ensured.

In a possible implementation, the first device sends the second PDB to the session management network element. In this way, the session management network element updates the PDB, to ensure the end-to-end delay.

In a possible implementation, the first device sends the third time interval to the session management network element. In this way, the session management network element may send the third time interval to the first terminal device, and the first terminal device sends the first uplink service flow based on the third time interval.

In a possible implementation, the first device is an application function network element. The first device determines, based on the second sending time point and buffer time of the first uplink service flow on the first terminal device, a third sending time point at which a first data source sends the first uplink service flow to the first terminal device, and the first device sends the third sending time point to the first data source. In this way, the application function network element may adjust the time point at which the first data source sends the first uplink service flow, so that the time point at which the first terminal device sends the first uplink service flow is also correspondingly adjusted, to ensure the delay certainty of the first uplink service flow, avoid the conflict between the first uplink service flow and another service flow, and improve the service performance. For example, the first data source and the first terminal device may be integrated into one device, or may be two separate devices.

In a possible implementation, the first device is a policy control function network element or a network exposure function network element, and the first device sends the second sending time point to an application function network element. In this way, the application function network element may adjust the time point at which the first data source sends the first uplink service flow, so that the time point at which the first terminal device sends the first uplink service flow is also correspondingly adjusted, to ensure the delay certainty of the first uplink service flow, avoid the conflict between the first uplink service flow and another service flow, and improve the service performance.

According to a second aspect, this application provides a communication method. The method may include: A session management network element receives second information from a second device. The session management network element sends first information to a first device, where the first information and the second information indicate that a first time interval between a first sending time point of a first uplink service flow of a first terminal device and a sending time point of a second uplink service flow of a second terminal device is less than a first threshold. The session management network element receives a second sending time point of the first uplink service flow from the first device, where a second time interval between the second sending time point and the sending time point of the second uplink service flow of the second terminal device is greater than or equal to the first threshold. The session management network element sends the second sending time point to a first access network device.

According to the foregoing method, the first sending time point of the first uplink service flow of the first terminal device is adjusted, to increase the time interval between the sending time point of the first uplink service flow and the sending time point of the second uplink service flow. In this way, the first access network device accessed by the first terminal device may allocate a resource to the first uplink service flow of the first terminal device successfully, to avoid a conflict between the first uplink service flow and another service flow, ensure a delay certainty of the first uplink service flow, and improve service performance.

In a possible implementation, the second information includes an identifier of the first terminal device, and the first information includes the identifier of the first terminal device. In this way, subsequently, the first device may query for characteristic information of the first uplink service flow based on the identifier of the first terminal device.

In a possible implementation, the second information includes at least one of an identifier of the first uplink service flow or an identifier of the first access network device, and the first information includes at least one of the identifier of the first uplink service flow or the identifier of the first access network device. In this way, subsequently, the first device may accurately query for the characteristic information of the first uplink service flow based on the first information.

In a possible implementation, the second information includes an identifier of the second terminal device, and the first information includes the identifier of the second terminal device. In this way, subsequently, the first device may determine, based on the identifier of the second terminal device, the second uplink service flow that has a scheduling conflict with the first uplink service flow.

In a possible implementation, the second information further includes an identifier of the second uplink service flow, and the first information further includes the identifier of the second uplink service flow. In this way, subsequently, the first device may accurately determine the second uplink service flow that has the scheduling conflict with the first uplink service flow.

In a possible implementation, the session management network element determines the second terminal device, where the first information further includes an identifier of the second terminal device. In this way, subsequently, the first device may accurately determine the second uplink service flow that has the scheduling conflict with the first uplink service flow.

In a possible implementation, the session management network element determines the second uplink service flow, where the first information further includes an identifier of the second uplink service flow. In this way, subsequently, the first device may accurately determine the second uplink service flow that has the scheduling conflict with the first uplink service flow.

In a possible implementation, the session management network element receives a second packet delay budget PDB from the first device, and the session management network element modifies a first PDB of the first uplink service flow to the second PDB. For example, the session management network element may modify the first PDB of the first uplink service flow to the second PDB by using a protocol data unit (protocol data unit, PDU) session procedure, or may modify the first PDB by using another procedure. In this way, the end-to-end delay can be ensured.

In a possible implementation, the session management network element receives a third time interval from the first device, where the third time interval is a time interval between the first sending time point and the second sending time point; and the session management network element sends the third time interval to the first terminal device. In this way, the first terminal device may send the first uplink service flow based on the third time interval, to avoid an air interface scheduling conflict.

In a possible implementation, the session management network element sends the second sending time point to the first terminal device. In this way, the first terminal device may send the first uplink service flow based on the second sending time point, to avoid an air interface scheduling conflict.

According to a third aspect, this application provides a communication method. The method may include: A first terminal device determines a first sending time point of a first uplink service flow. The first terminal device receives a third time interval from a session management network element. The first terminal device adds the first sending time point and the third time interval to obtain a second sending time point. The first terminal device sends the first uplink service flow based on the second sending time point.

According to the foregoing method, the first terminal device may send the first uplink service flow based on the modified second sending time point, so that a delay certainty of the first uplink service flow can be ensured, to improve service performance.

In a possible implementation, after sending a first request to a first access network device, the first terminal device does not receive a resource used to send the first uplink service flow, or the first terminal device does not receive feedback information indicating that the first uplink service flow is successfully sent, or the first terminal device does not receive the feedback information within preset duration. The first terminal device sends second information to the session management network element, where the second information indicates that the first terminal device does not send the first uplink service flow successfully. In this way, the first terminal device may initiate subsequent re-determining of a sending time point of the first uplink service flow by a core network control plane.

In a possible implementation, the second information includes an identifier of the first terminal device, or includes an identifier of the first terminal device and an identifier of the first uplink service flow, or includes an identifier of the first terminal device and an identifier of the first access network device, or includes an identifier of the first terminal device, an identifier of the first uplink service flow, and an identifier of the first access network device.

According to a fourth aspect, this application provides a communication method. The method may include: A first terminal device receives a second sending time point from a session management network element, and sends a first uplink service flow based on the second sending time point, where the second sending time point is an adjusted first sending time point of the first uplink service flow, and a second time interval between the second sending time point and a sending time point of a second uplink service flow of a second terminal device is greater than or equal to a first threshold. In this way, the first terminal device may send the first uplink service flow based on the modified second sending time point, so that a delay certainty of the first uplink service flow can be ensured, to improve service performance.

According to a fifth aspect, this application provides a communication method. The method may include: A second device determines that a first time interval between a sending time point of a first uplink service flow of a first terminal device and a sending time point of a second uplink service flow of a second terminal device is less than a first threshold. The second device sends second information to a session management network element, where the second information indicates that a first time interval between the sending time point of the first uplink service flow of the first terminal device and the sending time point of the second uplink service flow of the second terminal device is less than the first threshold. In this way, the second device may initiate a subsequent process of re-determining, by a core network control plane, a sending time point of the first uplink service flow, so that the first terminal device sends the first uplink service flow based on the adjusted sending time point, to avoid an air interface scheduling conflict.

In a possible implementation, the second device is a first access network device, and a specific method for determining, by the second device, that the first time interval between the sending time point of the first uplink service flow of the first terminal device and the sending time point of the second uplink service flow of the second terminal device is less than the first threshold may be: After receiving a first scheduling request from the first terminal device, the second device determines that a resource cannot be allocated to the first uplink service flow, or the second device determines that the first uplink service flow of the first terminal device is not received in a currently allocated uplink slot. The second device determines that the first time interval between the sending time point of the first uplink service flow of the first terminal device and the sending time point of the second uplink service flow of the second terminal device is less than the first threshold. In this way, the first access network device may accurately determine that an air interface scheduling conflict exists in the first uplink service flow, to initiate the subsequent process of re-determining the sending time point of the first uplink service flow by the core network control plane.

In a possible implementation, the second information includes an identifier of the first terminal device; or the second information includes an identifier of the first terminal device and an identifier of the first uplink service flow; or the second information includes an identifier of the first terminal device and an identifier of the first access network device; or the second information includes an identifier of the first terminal device, an identifier of the first uplink service flow, and an identifier of the first access network device. In this way, the first uplink service flow in which the air interface scheduling conflict occurs may be accurately reported.

In a possible implementation, the second information may further include an identifier of the second terminal device; or the second information may further include an identifier of the second terminal device and an identifier of the second uplink service flow. In this way, another uplink service flow that has a conflict with the first uplink service flow may be reported.

In a possible implementation, the second device is a user plane function network element, and a specific method for determining, by the second device, that the first time interval between the sending time point of the first uplink service flow of the first terminal device and the sending time point of the second uplink service flow of the second terminal device is less than the first threshold may be: The second device obtains the sending time point of the first uplink service flow, and determines that a difference between the sending time point of the first uplink service flow and a time point at which a first data packet of the first uplink service flow is currently received is greater than a second threshold; or the second device obtains an expected arrival time point of the first uplink service flow, and determines that a difference between the expected arrival time point and a time point at which the first uplink service flow is currently received is greater than a third threshold. The second device determines that the first time interval between the sending time point of the first uplink service flow of the first terminal device and the sending time point of the second uplink service flow of the second terminal device is less than the first threshold. In this way, the user plane function network element may accurately determine that an air interface scheduling conflict exists in the first uplink service flow, to initiate the subsequent process of re-determining the sending time point of the first uplink service flow by the core network control plane.

In a possible implementation, the second information includes an identifier of the first terminal device; or the second information includes an identifier of the first terminal device and an identifier of the first uplink service flow. In this way, the first uplink service flow in which the air interface scheduling conflict occurs may be accurately reported.

According to a sixth aspect, this application further provides a communication apparatus. The communication apparatus has a function of implementing the first device in the first aspect or the possible implementation examples of the first aspect. The function may be implemented by hardware, or may be implemented by hardware executing corresponding software. The hardware or the software includes one or more modules corresponding to the function.

In a possible implementation, a structure of the communication apparatus includes a transceiver unit and a processing unit. These units may perform corresponding functions of the first device in the first aspect or the possible implementations of the first aspect. For details, refer to detailed descriptions in the method examples. Details are not described herein again.

In a possible implementation, a structure of the communication apparatus includes a transceiver and a processor, and optionally further includes a memory. The transceiver is configured to receive and send information or data, and is configured to communicate and interact with another device in a communication system. The processor is configured to support the communication apparatus in performing a corresponding function of the first device in the first aspect or the possible implementations of the first aspect. The memory is coupled to the processor, and the memory stores program instructions and data that are necessary for the communication apparatus.

According to a seventh aspect, this application further provides a communication apparatus. The communication apparatus has a function of implementing the session management network element in the second aspect or the possible implementations of the second aspect. The function may be implemented by hardware, or may be implemented by hardware executing corresponding software. The hardware or the software includes one or more modules corresponding to the function.

In a possible implementation, a structure of the communication apparatus includes a transceiver unit and a processing unit. These units may perform corresponding functions of the session management network element in the second aspect or the possible implementations of the second aspect. For details, refer to detailed descriptions in the method examples. Details are not described herein again.

In a possible implementation, a structure of the communication apparatus includes a transceiver and a processor, and optionally further includes a memory. The transceiver is configured to receive and send information or data, and is configured to communicate and interact with another device in a communication system. The processor is configured to support the communication apparatus in performing a corresponding function of the session management network element in the second aspect or the possible implementations of the second aspect. The memory is coupled to the processor, and the memory stores program instructions and data that are necessary for the communication apparatus.

According to an eighth aspect, this application further provides a communication apparatus. The communication apparatus has a function of implementing the first terminal device in the third aspect or the possible implementations of the third aspect, or the fourth aspect or the possible implementations of the fourth aspect. The function may be implemented by hardware, or may be implemented by hardware executing corresponding software. The hardware or the software includes one or more modules corresponding to the function.

In a possible implementation, a structure of the communication apparatus includes a transceiver unit and a processing unit. These units may perform corresponding functions of the first terminal device in the third aspect or the possible implementations of the third aspect, or the fourth aspect or the possible implementations of the fourth aspect. For details, refer to detailed descriptions in the method examples. Details are not described herein again.

In a possible implementation, a structure of the communication apparatus includes a transceiver and a processor, and optionally further includes a memory. The transceiver is configured to receive and send information or data, and is configured to communicate and interact with another device in a communication system. The processor is configured to support the communication apparatus in performing a corresponding function of the first terminal device in the third aspect or the possible implementations of the third aspect, or the fourth aspect or the possible implementations of the fourth aspect. The memory is coupled to the processor, and the memory stores program instructions and data that are necessary for the communication apparatus.

According to a ninth aspect, this application further provides a communication apparatus. The communication apparatus has a function of implementing the second device in the fifth aspect or the possible implementations of the fifth aspect. The function may be implemented by hardware, or may be implemented by hardware executing corresponding software. The hardware or the software includes one or more modules corresponding to the function.

In a possible implementation, a structure of the communication apparatus includes a transceiver unit and a processing unit. These units may perform corresponding functions of the second device in the fifth aspect or the possible implementations of the fifth aspect. For details, refer to detailed descriptions in the method examples. Details are not described herein again.

In a possible implementation, a structure of the communication apparatus includes a transceiver and a processor, and optionally further includes a memory. The transceiver is configured to receive and send information or data, and is configured to communicate and interact with another device in a communication system. The processor is configured to support the communication apparatus in performing a corresponding function of the second device in the fifth aspect or the possible implementations of the fifth aspect. The memory is coupled to the processor, and the memory stores program instructions and data that are necessary for the communication apparatus.

According to a tenth aspect, an embodiment of this application provides a communication system. The communication system may include the first device, the session management network element, the first terminal device, the second device, and the like mentioned above.

According to an eleventh aspect, an embodiment of this application provides a computer-readable storage medium. The computer-readable storage medium stores program instructions. When the program instructions are run on a computer, the computer is enabled to perform the method according to any one of the first aspect and the possible implementations of the first aspect, the second aspect and the possible implementations of the second aspect, the third aspect and the possible implementations of the third aspect, the fourth aspect and the possible implementations of the fourth aspect, or the fifth aspect and the possible implementations of the fifth aspect. For example, the computer-readable storage medium may be any usable medium accessible to the computer. By way of example but not limitation, the computer-readable medium may include a non-transient computer-readable medium, a random access memory (random-access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of an instruction or a data structure and can be accessed by the computer.

According to a twelfth aspect, an embodiment of this application provides a computer program product including computer program code or instructions. When the computer program product runs on a computer, the computer is enabled to implement the method according to any one of the first aspect or the possible implementations of the first aspect, the second aspect or the possible implementations of the second aspect, the third aspect and the possible implementations of the third aspect, the fourth aspect and the possible implementations of the fourth aspect, or the fifth aspect and the possible implementations of the fifth aspect.

According to a thirteenth aspect, this application further provides a chip. The chip is coupled to a memory, and is configured to read and execute program instructions stored in the memory, to implement the method according to any one of the first aspect or the possible implementations of the first aspect, the second aspect or the possible implementations of the second aspect, the third aspect and the possible implementations of the third aspect, the fourth aspect and the possible implementations of the fourth aspect, or the fifth aspect and the possible implementations of the fifth aspect.

For the sixth aspect to the thirteenth aspect and technical effects that can be achieved in the sixth aspect to the thirteenth aspect, refer to descriptions of technical effects that can be achieved in the first aspect or the possible solutions of the first aspect, the second aspect or the possible solutions of the second aspect, the third aspect or the possible solutions of the third aspect, the fourth aspect or the possible solutions of the fourth aspect, or the fifth aspect or the possible solutions of the fifth aspect. Details are not described herein again.

### BRIEF DESCRIPTION OF DRAWINGS

FIG. 1 is a schematic diagram of an architecture of a 5GS;
FIG. 2 is a schematic diagram of an uplink service flow scheduling conflict on an air interface;
FIG. 3 is a schematic diagram of an application scenario according to this application;
FIG. 4 is a schematic flowchart of a communication method according to this application;
FIG. 5 is a schematic flowchart of another communication method according to this application;
FIG. 6 is a flowchart of an example of a communication method according to this application;
FIG. 7 is a flowchart of an example of another communication method according to this application;
FIG. 8A and FIG. 8B are a flowchart of an example of another communication method according to this application;
FIG. 9 is a schematic diagram of a structure of a communication apparatus according to this application; and
FIG. 10 is a diagram of a structure of a communication apparatus according to this application.

### DESCRIPTION OF EMBODIMENTS

The following further describes in detail this application with reference to accompanying drawings.

Embodiments of this application provide a communication method and apparatus, to resolve an air interface scheduling conflict of an access network device, ensure a delay certainty of a deterministic service, and improve service performance. The method and the apparatus in this application are based on a same technical concept. Because problem-resolving principles of the method and the apparatus are similar, mutual reference may be made to implementations of the apparatus and the method, and repeated parts are not described again.

In the descriptions of this application, terms such as "first" and "second" are only for distinction and description, but cannot be understood as indicating or implying relative importance, or as indicating or implying an order. It should be noted that a sequence of "first", "second", and the like is not limited in this application. For example, "second" may appear before "first". This is not limited in this application.

In the descriptions of this application, "at least one" means one or more and "a plurality of" means two or more. "At least one of the following" or a similar expression thereof refers to any combination of these items, including any combination of singular items or plural items. For example, at least one of a, b, or c may indicate: a, b, c, a and b, a and c, b and c, or a, b, and c, where a, b, and c may be singular or plural.

In descriptions of this application, "/" means "or". For example, a/b represents a or b.

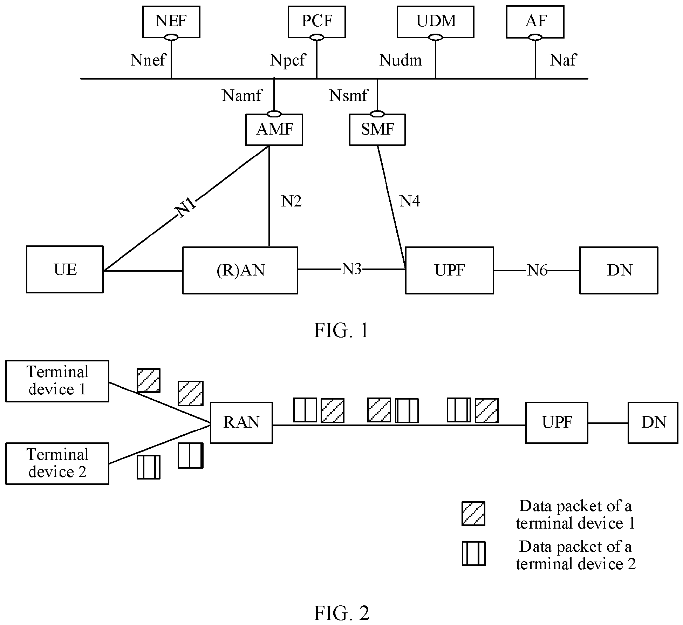

FIG. 1 shows a possible example of an architecture of a fifth generation mobile communication system (the 5th generation system, 5GS). The architecture of the communication system may include a radio access network, a terminal device, and a core network. For example, in the architecture of the communication system, the radio access network may include an access network device. The core network may include a network exposure function (network exposure function, NEF) network element, a policy control function (policy control function, PCF) network element, a unified data management (unified data management, UDM) network element, an application function (application function, AF) network element, an access and mobility management function (access and mobility management function, AMF) network element, a session management function (session management function, SMF) network element, and a user plane function (user plane function, UPF) network element. The AMF network element may be connected to the access network device through an N2 interface, the access network device may be connected to a UPF through an N3 interface, an SMF may be connected to the UPF through an N4 interface, and the AMF network element may be connected to UE through an N1 interface. An interface name is merely an example for description. This is not specifically limited in this embodiment of this application. It should be understood that this embodiment of this application is not limited to the communication system shown in FIG. 1. Names of the network elements shown in FIG. 1 are merely used as examples for description herein, and do not constitute limitations on the network elements included in the communication system architecture to which the method in this application is applicable. The following describes in detail functions of the network elements or devices in the communication system.

The terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device that has a wireless connection function, a vehicle-mounted device, and the like. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device shown as UE is used merely as an example, and the terminal device is not limited.

A (R)AN device is a device that provides access for the terminal device, including a radio access network (radio access network, RAN) device and an access network (access network, AN) device. The RAN device is mainly a wireless network device in a 3GPP network, and an AN may be an access network device defined in non-3GPP. The RAN device is mainly responsible for functions such as radio resource management, quality of service (quality of service, QoS) management, and data compression and encryption on an air interface side. The access network device may include base stations in various forms, such as a macro base station, a micro base station (also referred to as a small cell), a relay station, and an access point. In systems using different radio access technologies, a device having a base station function may have different names. For example, in a 5G system, the device is referred to as a RAN, a gNB (5G NodeB), or the like.

The access and mobility management function network element may be configured to manage access control and mobility of the terminal device. In actual application, the access and mobility management function network element includes a mobility management function in a mobility management entity (mobility management entity, MME) in a network framework of long term evolution (long term evolution, LTE), and includes an access management function. Specifically, the access and mobility management function network element may be responsible for registration of the terminal device, mobility management, a tracking area update procedure, reachability detection, selection of a session management function network element, mobility status transition management, and the like. For example, in 5G, the access and mobility management function network element may be an AMF network element, for example, as shown in FIG. 1. In future communication, for example, in 6G, the access and mobility management function network element may still be an AMF network element or may have another name. This is not limited in this application. When the access and mobility management function network element is an AMF network element, the AMF may provide a Namf service.

The session management function network element may be responsible for session management (including session establishment, modification, and release) of the terminal device, selection and reselection of the user plane function network element, internet protocol (internet protocol, IP) address assignment of the terminal device, quality of service (quality of service, QoS) control, and the like. For example, in 5G, the session management function network element may be an SMF network element, for example, as shown in FIG. 1. In future communication, for example, in 6G, the session management function network element may still be an SMF network element or may have another name. This is not limited in this application. When the session management function network element is an SMF network element, the SMF may provide an Nsmf service.

The user plane function network element is responsible for forwarding and receiving user data in the terminal device. The user plane function network element may receive user data from a data network, and transmit the user data to the terminal device through the access network device. The UPF network element may further receive user data from the terminal device through the access network device, and forward the user data to the data network. A transmission resource and a scheduling function that are used by the UPF network element to serve the terminal device are managed and controlled by the SMF network element. For example, in 5G, the user plane function network element may be a UPF network element, for example, as shown in FIG. 1. In future communication, for example, in 6G, the user plane function network element may still be a UPF network element or may have another name. This is not limited in this application.

The policy control function network element mainly supports providing a unified policy framework to control network behavior and providing a policy rule for a control layer network function, and is responsible for obtaining user subscription information related to a policy decision. For example, in 5G, the policy control function network element may be a PCF network element, for example, as shown in FIG. 1. In future communication, for example, in 6G, the policy control function network element may still be a PCF network element or may have another name. This is not limited in this application. When the policy control function network element is a PCF network element, the PCF network element may provide an Npcf service.

The network exposure function network element mainly supports secure interaction between a 3GPP network and a third-party application. For example, in 5G, the network exposure function network element may be a NEF network element, for example, as shown in FIG. 1. In future communication, for example, in 6G, the network exposure function network element may still be a NEF network element or may have another name. This is not limited in this application. When the network exposure function network element is a NEF, the NEF may provide an Nnef service for another network function network element.

The application function network element mainly supports interacting with a 3GPP core network to provide a service, for example, affecting a data routing decision and a policy control function, or providing some third-party services for a network side. For example, in 5G, the application function network element may be an AF network element, for example, as shown in FIG. 1. In future communication, for example, in 6G, the application function network element may still be an AF network element or may have another name. This is not limited in this application. When the application function network element is an AF network element, the AF network element may provide a Naf service.

The unified data management network element is configured to generate an authentication credential, process a subscriber identifier (for example, store and manage a subscription permanent identifier), control access authorization, manage subscription data, and the like. For example, in 5G, the unified data management network element may be a UDM network element, for example, as shown in FIG. 1. In future communication, for example, in 6G, the unified data management network element may still be a UDM network element or may have another name. This is not limited in this application. When the unified data management network element is a UDM network element, the UDM network element may provide a Nudm service.

The data network (data network, DN) is a service network that provides a data transmission service for a user, such as an IP multimedia service (IP multimedia service, IMS) or the Internet (Internet).

The UE accesses the DN through a protocol data unit (protocol data unit, PDU) session established between the UE and the DN.

Each of the foregoing network elements in the core network may also be referred to as a functional entity or a device, and may be a network element implemented on dedicated hardware, or may be a software instance run on dedicated hardware, or an instance of a virtualization function on an appropriate platform. For example, the virtualization platform may be a cloud platform.

It should be noted that the architecture of the communication system shown in FIG. 1 is not limited to including only the network elements shown in the figure, and may further include another device not shown in the figure. Details are not described herein in this application one by one.

It should be noted that a distribution form of the network elements is not limited in this embodiment of this application. The distribution form shown in FIG. 1 is merely an example, and is not limited in this application.

For ease of description, the network element shown in FIG. 1 is used as an example for description subsequently in this application, and an XX network element is directly referred to as an XX for short. For example, the SMF network element is referred to as the SMF for short. It should be understood that names of all network elements in this application are merely used as examples, and may also be referred to as other names in future communication. Alternatively, in future communication, the network elements in this application may be replaced with other entities, devices, or the like that have a same function. This is not limited in this application. Unified descriptions are provided herein, and details are not described below again.

It should be noted that the communication system shown in FIG. 1 does not constitute a limitation on a communication system to which embodiments of this application are applicable. The architecture of the communication system shown in FIG. 1 is a 5G system architecture. Optionally, the method in embodiments of this application is further applicable to various future communication systems, such as a 6G or another communication network.

Currently, uplink transmission over a 5GS air interface may include two modes: a grant-based (Grant-based) mode and a grant-free (Grant-free) mode. In the Grant-based mode, the terminal device first transmits a scheduling request (scheduling request, SR) based on a periodicity set by the access network device, to perform an uplink scheduling request. After receiving the SR, the access network device may generate an uplink grant ((uplink, UL) grant) based on a current scheduled resource and sends the uplink grant to the terminal device. After receiving the UL grant, the terminal device may report a buffer status report (buffer status report, BSR) to report information about a size of to-be-sent data of the terminal device. The access network device sends the UL grant based on the BSR when a resource is appropriate. The terminal device uploads the data based on the UL grant. In a Grant-free (that is, semi-persistent scheduling) case, the terminal device does not need to send an SR when uploading data, but directly sends data of the terminal device in a fixed slot and frequency of each frame. In this mode, a procedure of triggering SR scheduling may be omitted, and a service delay is reduced.

Currently, for a deterministic service flow, the 3GPP defines that an AF network element obtains a characteristic of the deterministic service flow, encapsulates the characteristic of the deterministic service flow into TSCAI, and notifies the TSCAI to the access network device. The TSCAI may include a service flow direction (an uplink service flow/a downlink service flow), a service flow transmission periodicity, and a service flow arrival time point (that is, a time point at which the downlink service flow arrives at the access network device through an N3 interface, or a time point at which the uplink service flow is sent from the terminal device). Based on the TSCAI, the access network device may know an arrival time point of each service flow, and then schedule the service flow (that is, allocate a resource to the service flow) based on a capability of the access network device, to ensure determined quality of service (quality of service, QoS).

In currently defined TSCAI, when uplink service flows of a plurality of terminal devices have a same service flow arrival time point or a time interval is less than a specific threshold (it should be understood that the specific threshold is not limited in this application), resources allocated by the access network device to the service flows may be the same, and consequently, an air interface scheduling conflict of the access network device may be caused. For example, a terminal device 1 and a terminal device 2 each have a periodic service flow and periodicities of the service flows are the same. When arrival time points of the service flows are the same or a time interval is less than a specific threshold, the access network device may first schedule a data packet of the terminal device 1 in a current periodicity, and first schedule a data packet of the terminal device 2 in a next periodicity. This phenomenon may be referred to as that a delay jitter occurs on the data packet of the terminal device 1 and the data packet of the terminal device 2. As shown in FIG. 2, the foregoing phenomenon may cause unstable periodicities of data packets of two flows between the RAN and the UPF. In this case, a delay of an uplink service flow of the terminal device in an air interface scheduling phase is increased, and a delay uncertainty is caused. Consequently, a packet loss on the air interface or even service interruption is caused, and service performance is affected.

Currently, a scenario that has a high requirement for the deterministic service flow is an industrial scenario. In the industrial scenario, the terminal device is generally a typical industrial terminal, for example, a programmable logic controller (programmable logic controller, PLC) or an industrial input/output (input/output, I/O) port. When a case shown in FIG. 2 occurs on a plurality of industrial terminals, a delay jitter of data packets may cause alarms of the industrial terminals. Another scenario is a common campus video surveillance scenario. In the campus video surveillance scenario, each camera wirelessly accesses a 5G network by using a terminal device. In addition to persistent background traffic, the camera may periodically generate an I-frame (the I-frame is also referred to as an intra-coded frame, is an independent frame carrying all information, and may be decoded independently without referring to another picture, that is, all I-frames are intra-coded). I-frames of a plurality of cameras may need to be allocated the same resource during air interface scheduling, and a delay uncertainty is caused. In addition, because the I-frame is larger than another frame generated by the camera, a delay uncertainty of the I-frame affects an application, may cause performance deterioration of a related background video algorithm, and may cause user experience deterioration on displaying.

Based on this, this application proposes a communication method, to resolve a problem that in a conventional technology, the delay of the uplink service flow in the air interface scheduling phase increases, causing the delay uncertainty, causing the packet loss on the air interface or even the service interruption, and affecting the service performance.

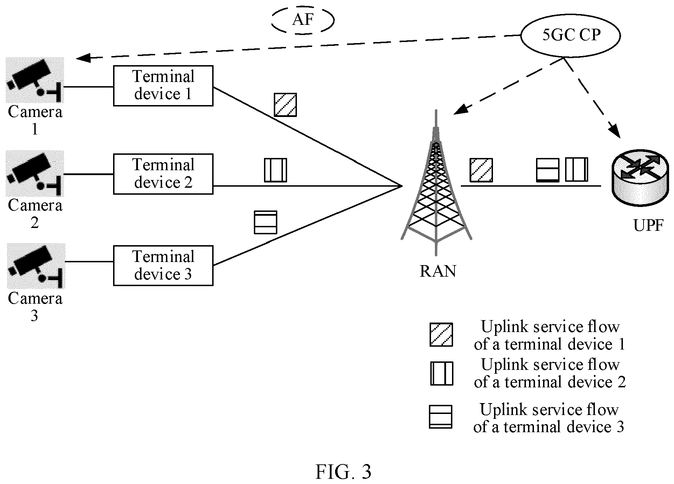

The communication method provided in embodiments of this application is applicable to a scenario of transmitting a service flow such as a deterministic service flow or a delay-sensitive service flow, for example, an industrial scenario or a video surveillance scenario. For example, FIG. 3 is a schematic diagram of a possible application scenario according to an embodiment of this application. It should be understood that in FIG. 3, a video surveillance scenario is merely used as an example for illustration, and is not intended to limit an application scenario in this embodiment of this application. The application scenario shown in FIG. 3 may include a camera (for example, a camera 1 to a camera 3 shown in FIG. 3), a terminal device (for example, a terminal device 1 to a terminal device 3 shown in FIG. 3), a RAN, a UPF network element, an AF network element, and a 5G core network control plane (5G core (control plane, CP), 5GC CP) network element. The 5GC CP network element may include an AMF network element, an SMF network element, a PCF network element, a NEF network element, and the like.

Specifically, the camera 1 to the camera 3 are respectively connected to the terminal device 1 to the terminal device 3, and the RAN schedules uplink service flows (that is, frames shot by the cameras) of the terminal device 1 to the terminal device 3.

It should be noted that, in addition to the schematic diagram of the scenario shown in FIG. 3, this embodiment of this application is further applicable to another scenario, and a principle is the same. The another scenario is not listed one by one herein.

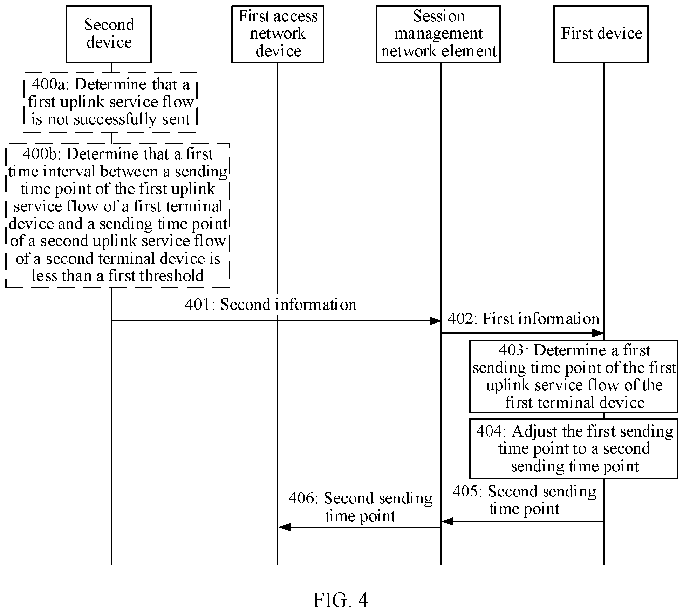

Based on the foregoing descriptions, as shown in FIG. 4, an embodiment of this application provides a communication method. A specific procedure of the method may include the following steps.

Step 401: A session management network element receives second information from a second device, and correspondingly, the second device sends the second information to the session management network element.

Optionally, the second device may be a first terminal device, a first access network device, or a user plane function network element, and the first access network device is an access network device accessed by the first terminal device. When the second device is the foregoing three different devices, cases in which the second device sends the second information to the session management network element are different. Details are as follows:
Case a1: When the second device is a first terminal device, the second information indicates that the first terminal device does not send a first uplink service flow successfully. Before a first device sends the second information to the session management network element, the second device may perform step 400a: The first terminal device determines that the first uplink service flow is not successfully sent.

Specifically, a specific method for determining, by the first terminal device, that the first uplink service flow is not successfully sent may include: After sending a first request to the first access network device, the first terminal device does not receive a resource (for example, an air interface resource) used to send the first uplink service flow, or the first terminal device does not receive feedback information (that is, uplink feedback information) indicating that the first uplink service flow is successfully sent, or the first terminal device does not receive the feedback information within preset duration. The first terminal device determines that the first uplink service flow is not successfully sent.

When the first terminal device is in a Grant-based mode, the first terminal device may determine, by determining that the resource used to send the first uplink service flow is not received, that the first uplink service flow is not successfully sent. When the first terminal device is in a Grant-free semi-persistent scheduling mode, the first terminal device may determine, by determining that the feedback information is not received or not received within the preset duration, that the first uplink service flow is not successfully sent.

For example, the first terminal device may send the second information to the session management network element through a PDU session modification request.

For example, in the case a1, the second information may include an identifier of the first terminal device; or the second information may include an identifier of the first terminal device and an identifier of the first uplink service flow; or the second information may include an identifier of the first terminal device and an identifier of the first access network device; or the second information may include an identifier of the first terminal device, an identifier of the first uplink service flow, and an identifier of the first access network device.

Case a2: When the second device is a first access network device, the second information indicates that a first time interval between a sending time point of a first uplink service flow of a first terminal device and a sending time point of a second uplink service flow of a second terminal device is less than a first threshold (that is, the sending time point of the first uplink service flow conflicts with the sending time point of the second uplink service flow). Before this, the second device may perform step 400b: The second device (that is, the first access network device) determines that the first time interval between the sending time point of the first uplink service flow of the first terminal device and the sending time point of the second uplink service flow of the second terminal device is less than the first threshold.

Specifically, a specific method for determining, by the first access network device, that the first time interval between the sending time point of the first uplink service flow of the first terminal device and the sending time point of the second uplink service flow of the second terminal device is less than the first threshold may include: After receiving a first scheduling request from the first terminal device, the first access network device determines that a resource cannot be allocated to the first uplink service flow, or the first access network device determines that the first uplink service flow of the first terminal device is not received in a currently allocated uplink slot. The first access network device determines that the first time interval between the sending time point of the first uplink service flow of the first terminal device and the sending time point of the second uplink service flow of the second terminal device is less than the first threshold.

When the first terminal device is in a Grant-based mode, the first access network device determines, by determining that the resource cannot be allocated to the first uplink service flow, that the first time interval between the sending time point of the first uplink service flow of the first terminal device and the sending time point of the second uplink service flow of the second terminal device is less than the first threshold. When the first terminal device is in a Grant-free semi-persistent scheduling mode, the first access network device determines, by determining that the first uplink service flow of the first terminal device is not received in the currently allocated uplink slot, that the first time interval between the sending time point of the first uplink service flow of the first terminal device and the sending time point of the second uplink service flow of the second terminal device is less than the first threshold.

For example, in the case a2, the second information may include an identifier of the first terminal device; or the second information may include an identifier of the first terminal device and an identifier of the first uplink service flow; or the second information may include an identifier of the first terminal device and an identifier of the first access network device; or the second information may include an identifier of the first terminal device, an identifier of the first uplink service flow, and an identifier of the first access network device. Further, based on the foregoing descriptions, the second information may further include an identifier of the second terminal device; or the second information may further include an identifier of the second terminal device and an identifier of the second uplink service flow.

When the second information includes the identifier of the second terminal device but does not include the identifier of the second uplink service flow, the second terminal device includes an uplink service flow, that is, the second uplink service flow. In this case, the second uplink service flow may be determined by reporting the identifier of the second terminal device.

Case a3: When the second device is a user plane function network element, the second information indicates that a first time interval between a sending time point of a first uplink service flow of a first terminal device and a sending time point of a second uplink service flow of the second terminal device is less than a first threshold. Before this, the second device may also perform step 400b: The second device (that is, the user plane function network element) determines that the first time interval between the sending time point of the first uplink service flow of the first terminal device and the sending time point of the second uplink service flow of the second terminal device is less than the first threshold.

Specifically, a specific method for determining, by the user plane function network element, that the first time interval between the sending time point of the first uplink service flow of the first terminal device and the sending time point of the second uplink service flow of the second terminal device is less than the first threshold may include: The user plane function network element obtains the sending time point of the first uplink service flow, and determines that a difference between the sending time point of the first uplink service flow and a time point at which a first data packet of the first uplink service flow is currently received is greater than a second threshold; or the user plane function network element obtains an expected arrival time point of the first uplink service flow, and determines that a difference between the expected arrival time point and a time point at which the first uplink service flow is currently received is greater than a third threshold. The user plane function network element determines that the first time interval between the sending time point of the first uplink service flow of the first terminal device and the sending time point of the second uplink service flow of the second terminal device is less than the first threshold.

Optionally, when the first uplink service flow is a video service flow, the user plane function network element may obtain the sending time point of the first uplink service flow by using a deep packet inspection (deep packet inspection, DPI) method.

For example, in the case a3, the second information may include an identifier of the first terminal device; or the second information may include an identifier of the first terminal device and an identifier of the first uplink service flow.

It should be noted that, in the foregoing three cases, when the second information does not include the identifier of the first uplink service flow, the first terminal device includes an uplink service flow, that is, the first uplink service flow. In this case, the first uplink service flow may be determined by reporting the identifier of the first terminal device.

In the foregoing three cases, the second information may be further understood as indicating that the first terminal device does not send the first uplink service flow based on a first sending time point, or may further indicate an air interface scheduling conflict of the first uplink service flow of the first terminal device.

It should be noted that there may be one or more second terminal devices, and there may be one or more second uplink service flows, where one second terminal device corresponds to one second uplink service flow. Both the first terminal device and the second terminal device access the first access network device.

Step 402: The session management network element sends first information to the first device, where the first information indicates that the first time interval between the first sending time point of the first uplink service flow of the first terminal device and the sending time point of the second uplink service flow of the second terminal device is less than the first threshold.

The first device may be an application function network element, a policy control function network element, or a network exposure function network element.

For example, when the second information includes the identifier of the first terminal device, the first information may include the identifier of the first terminal device. Further, when the second information further includes at least one of the identifier of the first uplink service flow or the identifier of the first access network device, the first information may further include at least one of the identifier of the first uplink service flow or the identifier of the first access network device.

In an optional implementation, when the second information further includes the identifier of the second terminal device, the first information may further include the identifier of the second terminal device. Further, when the second information further includes the identifier of the second uplink service flow, the first information may further include the identifier of the second uplink service flow. In this case, the first access device directly reports the identifier of the second terminal device, or the identifier of the second terminal device and the identifier of the second uplink service flow by using the second information, and the session management network element includes the information in the first information.

In another optional implementation, the session management network element may further determine the second terminal device, and the first information may further include the identifier of the second terminal device. Further, the session management network element may further determine the second uplink service flow, and the first information may further include the identifier of the second uplink service flow. In this case, the session management network element determines that the sending time point of the second uplink service flow of the second terminal device conflicts with the sending time point of the first uplink service flow, and then includes the identifier of the second terminal device, or the identifier of the second terminal device and the identifier of the second uplink service flow in the first information.

For example, the first information is further used to request the first device to reschedule the first uplink service flow, that is, used to request the first device to adjust the sending time point of the first uplink service flow.

Step 403: The first device determines the first sending time point of the first uplink service flow of the first terminal device.

In an optional implementation, a specific method for determining, by the first device, the first sending time point of the first uplink service flow of the first terminal device may be: The first device queries for characteristic information of the first uplink service flow from a unified data management network element based on the first information, where the characteristic information of the first uplink service flow includes the first sending time point.

For example, that the first device queries for the characteristic information of the first uplink service flow from the unified data management network element based on the first information may be specifically: The first device may query for the characteristic information of the first uplink service flow from the unified data management network element based on the identifier of the first terminal device included in the first information, or the identifier of the first terminal device and the identifier of the first uplink service flow included in the first information, or the identifier of the first terminal device and the identifier of the first access network device included in the first information, or the identifier of the first terminal device, the identifier of the first uplink service flow, and the identifier of the first access network device included in the first information.

Specifically, the characteristic information of the first uplink service flow may include at least one of the first sending time point of the first uplink service flow, a data size of the first uplink service flow, or a sending periodicity of the first uplink service flow.

Step 404: The first device adjusts the first sending time point to a second sending time point, where a second time interval between the second sending time point and the sending time point of the second uplink service flow of the second terminal device is greater than or equal to the first threshold.

In an optional implementation, a specific method for adjusting, by the first device, the first sending time point to the second sending time point may be: The first device determines characteristic information of the second uplink service flow, and then adjusts the first sending time point to the second sending time point based on the characteristic information of the second uplink service flow.

The characteristic information of the second uplink service flow may include at least one of the sending time point of the second uplink service flow, a data size of the second uplink service flow, or a sending periodicity of the second uplink service flow.

In an example, a specific method for determining, by the first device, the characteristic information of the second uplink service flow may be: The first device obtains the characteristic information of the first uplink service flow, and determines the characteristic information of the second uplink service flow based on the characteristic information of the first uplink service flow.

For a method for obtaining, by the first device, the characteristic information of the first uplink service flow, refer to related descriptions in step 403 in which the first device queries for the characteristic information of the first uplink service flow from the unified data management network element based on the first information. Details are not described herein again.

Optionally, a specific method for determining, by the first device, the characteristic information of the second uplink service flow based on the characteristic information of the first uplink service flow may be: The first device queries, from the unified data management network element based on the characteristic information of the first uplink service flow, for the characteristic information of the second uplink service flow of the second terminal device that accesses the access network device (that is, the first access network device) that is the same as the access network device accessed by the first terminal device, where the first time interval between the first sending time point of the first uplink service flow and the sending time point of the second uplink service flow is less than the first threshold.

In another example, a specific method for determining, by the first device, the characteristic information of the second uplink service flow may be: The first information includes the identifier of the second terminal device, or includes the identifier of the second terminal device and the identifier of the second uplink service flow, and the first device determines the characteristic information of the second uplink service flow based on the first information. Specifically, the first device may determine the characteristic information of the second uplink service flow based on the identifier of the second terminal device included in the first information, or the identifier of the second terminal device and the identifier of the second uplink service flow included in the first information.

In an optional implementation, a specific method for adjusting, by the first device, the first sending time point to the second sending time point based on the characteristic information of the second uplink service flow may be: The first device calculates the second sending time point based on the characteristic information of the first uplink service flow and the characteristic information of the second uplink service flow. Then, the first device adjusts the first sending time point to the second sending time point.

For example, when calculating the second sending time point based on the characteristic information of the first uplink service flow and the characteristic information of the second uplink service flow, the first device determines, based on the first sending time point, the data size, and the sending periodicity of the first uplink service flow in the characteristic information of the first uplink service flow, time needed by the first uplink service flow in one periodicity, and determines, based on the sending time point, the data size, and the sending periodicity of the second uplink service flow in the characteristic information of the second uplink service flow, time needed by the second uplink service flow in one periodicity, so that the first device calculates the second sending time point based on the time needed by the first uplink service flow and the time needed by the second uplink service flow in one periodicity.

Specifically, when calculating the second sending time point based on the characteristic information of the first uplink service flow and the characteristic information of the second uplink service flow, the first device may calculate only the second sending time point of the first uplink service flow, or may calculate the second sending time point of the first uplink service flow and a fourth sending time point of the second uplink service flow (that is, perform unified scheduling on the first uplink service flow and the second uplink service flow). A time interval between the fourth sending time point and the second sending time point is greater than or equal to the first threshold.

Step 405: The first device sends the second sending time point to the session management network element.

Step 406: The session management network element sends the second sending time point to the first access network device.

In an optional implementation, when sending the second sending time point to the first access network device, the session management network element may specifically update TSCAI of the first uplink service flow based on the second sending time point, and send the updated TSCAI to the first access network device, where the updated TSCAI includes the second sending time point.

When updating the TSCAI of the first uplink service flow based on the second sending time point, the session management network element modifies the first sending time point in the TSCAI of the first uplink service flow to the second sending time point, and other information in the TSCAI, such as a service flow direction (an uplink service flow/a downlink service flow) and a transmission periodicity of the service flow remains unchanged.

In a first example, after the first device adjusts the first sending time point to the second sending time point, the first device determines a third time interval between the first sending time point and the second sending time point. Then, the first device determines a second packet delay budget (packet delay budget, PDB) of the first uplink service flow based on the third time interval.

The third time interval is time at which the first terminal device needs to buffer the first uplink service flow, so that the first terminal device sends the first uplink service flow at the second sending time point.

Optionally, a specific method for determining, by the first device, the second PDB of the first uplink service flow based on the third time interval may be: The first device subtracts the third time interval from a first PDB (that is, an original PDB) of the first uplink service flow, to obtain the second PDB.

Currently, an end-to-end delay is ensured. Therefore, the PDB needs to be updated after the sending time point of the first uplink service flow is adjusted, that is, the third time interval is subtracted from the first PDB to obtain the second PDB. For example, before the sending time point is adjusted, the first sending time point is the 100^{th} millisecond (ms), and the first PDB of an entire quality of service flow (QoS flow) is 50 ms. However, after the sending time point is adjusted, the first terminal device needs to send the first uplink service flow at the 120^{th} ms, to avoid an air interface scheduling conflict. Therefore, the 50 ms first PDB needs to be correspondingly changed to the 30 ms second PDB, that is, the second PDB (30 ms) = the first PDB (50 ms) - (the first sending time point at the 100^{th} ms - the first sending time point at the 120^{th} ms). In this way, it is ensured that a delay experienced by the first uplink service flow is still 50 ms.

Optionally, the first device may send the second PDB to the session management network element.

Further, the session management network element may modify the first PDB of the first uplink service flow to the second PDB.

For example, the session management network element may modify the first PDB in the first access network device to the second PDB by using a PDU session modification procedure or another method.

In an optional manner, the first device may send the third time interval to the session management network element. Then, the session management network element sends the third time interval to the first terminal device, so that the first terminal device sends the first uplink service flow based on the third time interval. Specifically, the first terminal device may add the first sending time point and the third time interval to obtain the second sending time point, and then send the first uplink service flow based on the second sending time point.

For example, when sending the third time interval to the first terminal device, the session management network element may send the third time interval to the first terminal device by using an access and mobility management function network element through an N1 interface, or may send the third time interval to the first terminal device by using the first access network device.

In another optional manner, the session management network element sends the second sending time point to the first terminal device. Then, the first terminal device may directly send the first uplink service flow based on the second sending time point.

For example, the session management network element may send the second sending time point to the first terminal device by using an access and mobility management function network element through an N1 interface.

In still another optional manner, the first access network device may send the second sending time point to the first terminal device after receiving the second sending time point from the session management network element. Then, the first terminal device may directly send the first uplink service flow based on the second sending time point.

In the foregoing first example, QoS is adaptively adjusted, and the first terminal device is notified of the third time interval or the second sending time point, so that the first terminal device sends the first uplink service flow based on the second sending time point, to ensure a delay certainty of the first uplink service flow, avoid a scheduling conflict, and improve service performance.

In a second example, when the first device is an application function network element, after the first device adjusts the first sending time point to the second sending time point, the first device determines, based on the second sending time point and buffer time of the first uplink service flow on the first terminal device, a third sending time point at which a first data source sends the first uplink service flow to the first terminal device, and sends the third sending time point to the first data source.

Optionally, the first data source may be a device integrated with the first terminal device, or may be a device independently disposed from the first terminal device. For example, in a video surveillance scenario, the first data source may be a camera, and the first terminal device may be a terminal device connected to the camera.

For example, when sending the third sending time point to the first data source, the application function network element may send a first notification message to the first data source to carry the third sending time point, where the first notification message indicates the first data source to adjust the original sending time point for sending the first uplink service flow to the third sending time point.

Then, the first data source sends the first uplink service flow to the first terminal device based on the third sending time point. After receiving the first uplink service flow, the first terminal device sends the first uplink service flow according to an existing procedure. In this case, after the first data source sends the first uplink service flow based on the third sending time point, a sending time point at which the first terminal device sends the first uplink service flow according to the existing procedure is the second sending time point.

In a third example, when the first device is a policy control function network element or a network exposure function network element, after the first device adjusts the first sending time point to the second sending time point, the first device sends the second sending time point to an application function network element. Then, the application function network element determines, based on the second sending time point and buffer time of the first uplink service flow on the first terminal device, a third sending time point at which a first data source sends the first uplink service flow to the first terminal device, and sends the third sending time point to the first data source.

Similarly, the first data source then sends the first uplink service flow to the first terminal device based on the third sending time point, and after receiving the first uplink service flow, the first terminal device sends the first uplink service flow according to an existing procedure.

In the second example and the third example, the application function network element adjusts the time point at which the first data source sends the first uplink service flow, so that the time point at which the first terminal device sends the first uplink service flow is also correspondingly adjusted, to ensure a delay certainty of the first uplink service flow, avoid a scheduling conflict, and improve service performance.

According to the communication method provided in this embodiment of this application, the first device adjusts the first sending time point of the first uplink service flow of the first terminal device, so that the first access network device can successfully allocate a resource to the first uplink service flow of the first terminal device, and finally the first uplink service flow is successfully sent, to avoid a conflict between the first uplink service flow and another service flow. Therefore, the method can ensure a delay certainty of the first uplink service flow and improve service performance.

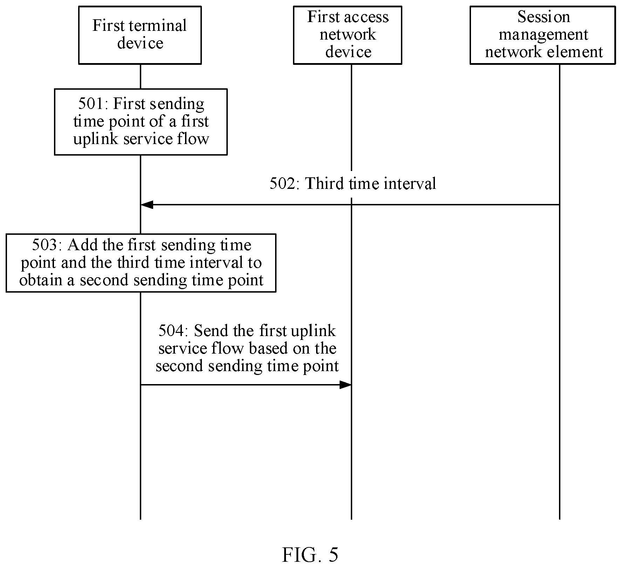

Based on the foregoing embodiment, as shown in FIG. 5, an embodiment of this application further provides a communication method. A specific procedure of the method may include the following steps.

Step 501: A first terminal device determines a first sending time point of a first uplink service flow.

Specifically, the first terminal device determines the first sending time point by configuring the first terminal device by a first access network device.

Step 502: The first terminal device receives a third time interval from a session management network element.

For example, the first terminal device may receive the third time interval from the session management network element by using an access and mobility management function network element through an N1 interface; or the first terminal device may receive the third time interval by using a first access network element.

Specifically, for specific content of the third time interval, refer to related descriptions of the third time interval in the embodiment shown in FIG. 4. Details are not described herein again.

Step 503: The first terminal device adds the first sending time point and the third time interval to obtain a second sending time point.

Step 504: The first terminal device sends the first uplink service flow based on the second sending time point.

In an optional implementation, before step 501, after sending a first request to the first access network device, the first terminal device does not receive a resource used to send the first uplink service flow, or the first terminal device does not receive feedback information indicating that the first uplink service flow is successfully sent, or the first terminal device does not receive the feedback information within preset duration. Then, the first terminal device sends second information to the session management network element, where the second information indicates that the first terminal device does not send the first uplink service flow successfully.

Optionally, the second information may include an identifier of the first terminal device, or include an identifier of the first terminal device and an identifier of the first uplink service flow, or include an identifier of the first terminal device and an identifier of the first access network device, or include an identifier of the first terminal device, an identifier of the first uplink service flow, and an identifier of the first access network device.

For a procedure after the session management network element receives the second information, refer to related descriptions in the embodiment shown in FIG. 4. Details are not described herein again.

According to the communication method provided in this embodiment of this application, the first terminal device may send the first uplink service flow based on the modified second sending time point, so that a delay certainty of the first uplink service flow can be ensured, to improve service performance.

Based on the foregoing embodiments, the following describes in detail the communication methods provided in embodiments of this application by using specific examples.

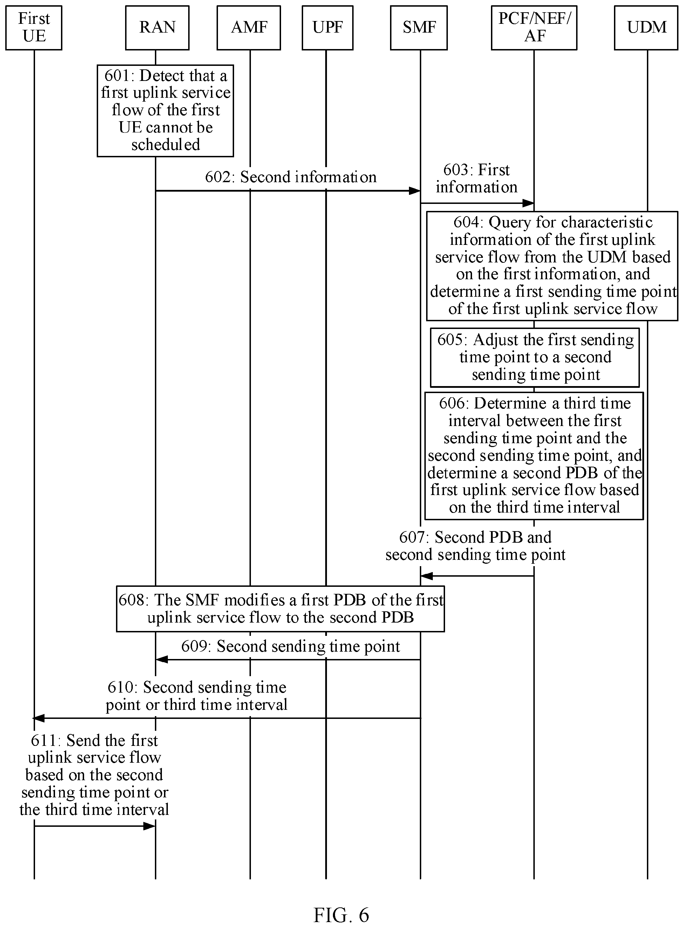

FIG. 6 shows an example of a procedure of a communication method. The example in which a first terminal device is first UE, a first access network device is a RAN, a session management network element is an SMF, a user plane function network element is a UPF, a unified data management network element is a UDM, a second device is a RAN, and a first device is a PCF, a NEF, or an AF is used for description.

A specific procedure of the example may include the following steps.

Step 601: The RAN detects that a first uplink service flow of the first UE cannot be scheduled.

This step may be understood as follows: The RAN detects an air interface scheduling conflict. To be specific, the RAN determines that a first time interval between a first sending time point of the first uplink service flow of the first UE and a sending time point of a second uplink service flow of second UE is less than a first threshold. For step 601, refer to related descriptions of step 400b in the embodiment shown in FIG. 4.

Specifically, when the first UE is in a Grant-based scheduling mode, if the RAN finds that a corresponding resource cannot be allocated when an uplink SR of the first UE is received, the RAN determines that an air interface scheduling conflict occurs, and a requirement of the first UE for an uplink resource cannot be met. In this case, the RAN may perform subsequent step 602. When the first UE is in a Grant-free semi-persistent scheduling mode, if the RAN finds that an expected uplink service flow of the first UE is not received in a currently allocated uplink slot, the RAN may determine that an uplink service flow scheduling conflict exists. Then, the RAN performs step 602.

Step 602: The RAN sends second information to the SMF. The second information indicates that the first time interval between the sending time point of the first uplink service flow of the first UE and the sending time point of the second uplink service flow of the second UE is less than the first threshold, that is, notifies the SMF that an air interface scheduling conflict exists.

For step 602, refer to related descriptions of step 401 in the embodiment shown in FIG. 4.

Specifically, the second information may include an identifier of the first UE, or include an identifier of the first UE and an identifier of the first uplink service flow, or include an identifier of the first UE and an identifier of the RAN, or include an identifier of the first UE, an identifier of the first uplink service flow, and an identifier of the RAN.

Optionally, the second information may further include an identifier of the second UE, or include an identifier of the second UE and an identifier of the second uplink service flow. For example, when the first UE is in the Grant-based scheduling mode, the second UE may be another UE that requests or occupies an uplink resource when the first UE requests the uplink resource.

A core network element (for example, the SMF) determines, by using the identifier of the second UE, or the identifier of the second UE and the identifier of the second uplink service flow, whether an uplink service flow that conflicts with the first uplink service flow is the second uplink service flow.

It should be understood that the second UE is not limited to one UE, and may be a plurality of other UEs. Therefore, the identifier of the second UE may be identifiers of the plurality of UEs, or identifiers of the plurality of UEs and identifiers of corresponding uplink service flows.

For example, the RAN may send the second information to the SMF by using the AMF or the UPF.

Step 603: The SMF sends first information to the PCF/NEF/AF, where the first information is used to request the PCF/NEF/AF to reschedule the first uplink service flow.

For step 603, refer to related descriptions of step 402 in the embodiment shown in FIG. 4.

Specifically, the first information may include the identifier of the first UE, or include the identifier of the first UE and the identifier of the first uplink service flow, or include the identifier of the first UE and the identifier of the RAN, or include the identifier of the first UE, the identifier of the first uplink service flow, and the identifier of the RAN.

Optionally, the first information may further include the identifier of the second UE, or include the identifier of the second UE and the identifier of the second uplink service flow.

When the second information includes the identifier of the second UE, or includes the identifier of the second UE and the identifier of the second uplink service flow, the first information may directly include the identifier of the second UE, or include the identifier of the second UE and the identifier of the second uplink service flow. When the second information does not include information about the second UE (for example, the identifier of the second UE, or the identifier of the second UE and the identifier of the second uplink service flow), the SMF may first determine the information about the second UE, and then the SMF includes the determined information about the second UE in the first information.

Step 604: The PCF/NEF/AF queries for characteristic information of the first uplink service flow from the UDM based on the first information, and determines the first sending time point of the first uplink service flow.

For step 604, refer to related descriptions of step 403 in the embodiment shown in FIG. 4.

Specifically, the characteristic information of the first uplink service flow may include the first sending time point of the first uplink service flow, and the like. The PCF/NEF/AF may determine the first sending time point of the first uplink service flow based on the characteristic information of the first uplink service flow.

Step 605: The PCF/NEF/AF adjusts the first sending time point to a second sending time point.

For step 605, refer to related descriptions of step 404 in the embodiment shown in FIG. 4.

Specifically, for a specific method for adjusting, by the PCF/NEF/AF, the first sending time point to the second sending time point, refer to related descriptions of adjusting the first sending time point to the second sending time point by the first device in the embodiment shown in FIG. 4. Details are not described herein again.

Step 606: The PCF/NEF/AF determines a third time interval between the first sending time point and the second sending time point, and determines a second PDB of the first uplink service flow based on the third time interval.

Specifically, the PCF/NEF/AF subtracts the third time interval from a first PDB of the first uplink service flow, to obtain the second PDB.

Step 607: The PCF/NEF/AF sends the second PDB and the second sending time point to the SMF.

Optionally, the PCF/NEF/AF may further send the third time interval to the SMF.

Step 608: The SMF modifies the first PDB of the first uplink service flow to the second PDB.

For example, the SMF may modify the first PDB of the first uplink service flow to the second PDB by using a PDU session modification procedure.

The SMF modifies the first PDB to the second PDB, and an end-to-end delay can be ensured, so that delay of the first uplink service flow remains unchanged, that is, a delay certainty of the first uplink service flow is ensured.

For step 606 to step 608, refer to related descriptions of step 405 in the embodiment shown in FIG. 4.

Step 609: The SMF sends the second sending time point to the RAN.

For step 609, refer to related descriptions of step 406 in the embodiment shown in FIG. 4.

Specifically, the SMF may update TSCAI of the first uplink service flow based on the second sending time point, and send the updated TSCAI to the RAN, where the updated TSCAI includes the second sending time point. In this way, the RAN may know that the first sending time point is adjusted to the second sending time point, to allocate a resource in advance based on the second sending time point.

Step 610: The SMF sends the second sending time point or the third time interval to the first UE.

For example, the SMF may send the second sending time point or the third time interval to the first UE by using the AMF through an N1 interface.

It should be understood that the SMF can send the third time interval to the first UE only after the PCF/NEF/AF sends the third time interval to the SMF.

For step 610, refer to related descriptions of step 502 in the embodiment shown in FIG. 5.

Step 611: The first UE sends the first uplink service flow based on the second sending time point or the third time interval.

Specifically, when the first UE receives the third time interval, the first UE may calculate the second sending time point based on the third time interval. For example, the first UE adds the first sending time point and the third time interval to obtain the second sending time point. Then, the first UE sends the first uplink service flow based on the second sending time point. For this case, refer to descriptions in step 503 and step 504 in the embodiment shown in FIG. 5.

When the first UE receives the second sending time point, the first UE may directly send the first uplink service flow based on the second sending time point.

For example, the first UE buffers the first uplink service flow, and then sends the first uplink service flow at the second sending time point.

In this example, the RAN performs conflict detection. After detecting an air interface scheduling conflict (that is, determining that the first time interval between the first sending time point of the first uplink service flow of the first UE and the sending time point of the second uplink service flow of the second UE is less than the first threshold), the RAN feeds back a conflicting service flow to the core network element, and the core network element reschedules the service flow and adjusts QoS accordingly, in other words, the core network element redetermines the sending time point of the first service flow of the first UE or sets buffer time (that is, the third time interval), and then adjusts a QoS requirement of the first service flow accordingly. The core network element notifies the RAN of the adjusted QoS and the corresponding second sending time point, and notifies the first UE of the second sending time point or the buffer time of the first UE, to indicate the first UE to send an uplink service flow at a correct idle time point, to avoid an air interface scheduling conflict, and improve air interface capacity and resource utilization.

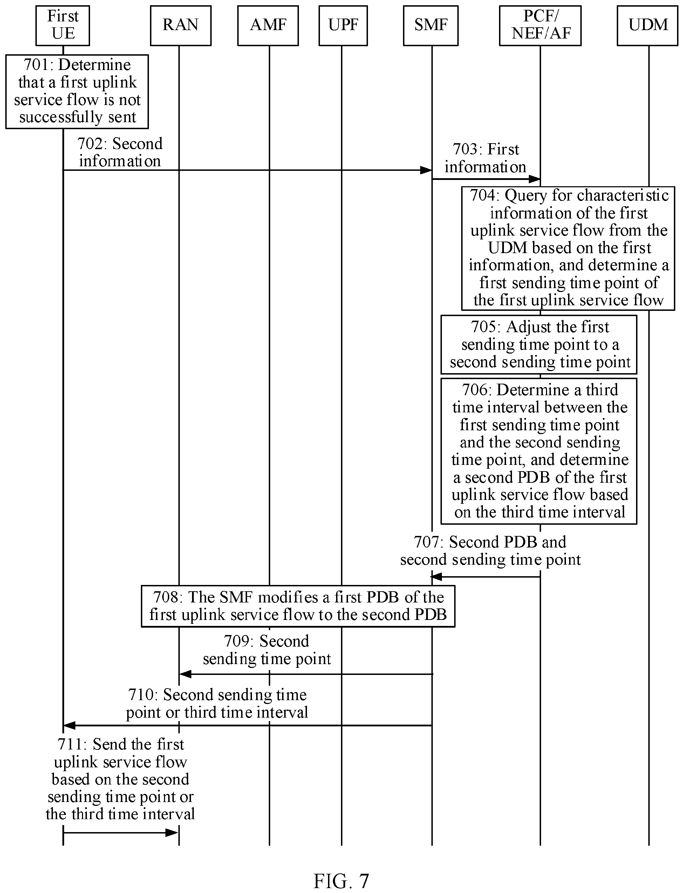

FIG. 7 shows an example of a procedure of another communication method. An example in which a first terminal device is first UE, a first access network device is a RAN, a session management network element is an SMF, a user plane function network element is a UPF, a unified data management network element is a UDM, a second device is the first UE, and a first device is a PCF, a NEF, or an AF is used for description.

A specific procedure of the example may include the following steps.

Step 701: The first UE determines that a first uplink service flow is not successfully sent.

This step may also be understood as that the first UE perceives that the uplink service flow conflicts with another service flow.

For step 701, refer to related descriptions of step 400a in the embodiment shown in FIG. 4.

Specifically, when the first UE is in a Grant-based SR mode, the first UE may determine, by not receiving a resource used to send the first uplink service flow after sending an uplink SR (that is, the first request in the foregoing embodiment), that the first uplink service flow is not successfully sent, that is, the first UE learns, by failing to obtain an uplink Grant, that an air interface resource cannot be allocated at a current sending time point. When the first UE is in semi-persistent scheduling, the first UE may determine, by not receiving feedback information indicating that the first uplink service flow is successfully sent or not receiving the feedback information within preset duration, that the first uplink service flow is not successfully sent. In other words, the first UE learns of a service flow conflict in a manner such as failing to obtain an uplink feedback (uplink feedback timeout).

Step 702: The first UE sends second information to the SMF, where the second information indicates that the first UE does not send the first uplink service flow successfully.

For step 702, refer to related descriptions of step 401 in the embodiment shown in FIG. 4.

For example, the first UE sends the second information to the SMF through a PDU session modification request.

For example, the PDU session request or the second information is used to request to modify a current QoS flow.

Specifically, the second information may include an identifier of the first UE; or the second information may include an identifier of the first UE and an identifier of the first uplink service flow; or the second information may include an identifier of the first UE and an identifier of the accessed RAN; or the second information may include an identifier of the first UE, an identifier of the first uplink service flow, and an identifier of the RAN.

When the second information includes the identifier of the RAN, a core network element (for example, the PCF/NEF/AF) may determine, based on the identifier of the RAN, a service flow that conflicts with the first uplink service flow and that is in an uplink service flow of a terminal device accessing the RAN.

Step 703: The SMF sends first information to the PCF/NEF/AF, where the first information is used to request the PCF/NEF/AF to reschedule the first uplink service flow.

For step 703, refer to related descriptions of step 402 in the embodiment shown in FIG. 4.

Specifically, the first information may include the identifier of the first UE, or include the identifier of the first UE and the identifier of the first uplink service flow, or include the identifier of the first UE and the identifier of the RAN, or include the identifier of the first UE, the identifier of the first uplink service flow, and the identifier of the RAN.

Optionally, the first information may further include an identifier of second UE, or include an identifier of second UE and an identifier of a second uplink service flow. The SMF may first determine information about the second UE (for example, the identifier of the second UE, or the identifier of the second UE and the identifier of the second uplink service flow), and then the SMF includes the determined information about the second UE in the first information.

For step 704 to step 709, refer to descriptions of step 604 to step 609 in the embodiment shown in FIG. 6. Details are not described herein again.

A difference between step 708 and step 608 is that a PDU session modification procedure in step 708 is in response to the PDU session modification request initiated by the first UE, and a PDU session modification procedure in step 608 is initiated by the SMF.

Step 710: The SMF sends a second sending time point or a third time interval to the first UE.

For example, the SMF responds to the PDU session modification request, and sends the second sending time point or the third time interval to the first UE through a message in response to the PDU session modification request.

It should be understood that the SMF can send the third time interval to the first UE only after the PCF/NEF/AF sends the third time interval to the SMF.

For step 710, refer to related descriptions of step 502 in the embodiment shown in FIG. 5.

Step 711: The first UE sends the first uplink service flow based on the second sending time point or the third time interval.

For specific content of this step, refer to related descriptions in step 611. Details are not described herein again.

In this example, the UE determines that a service flow conflict occurs (that is, determines that the first uplink service flow is not successfully sent), and reports related information about the first uplink service flow. The core network element performs re-scheduling, and plans a sending time point and QoS of the first uplink service flow. This method can reduce air interface calculation overheads and signaling overheads while avoiding an air interface scheduling conflict.

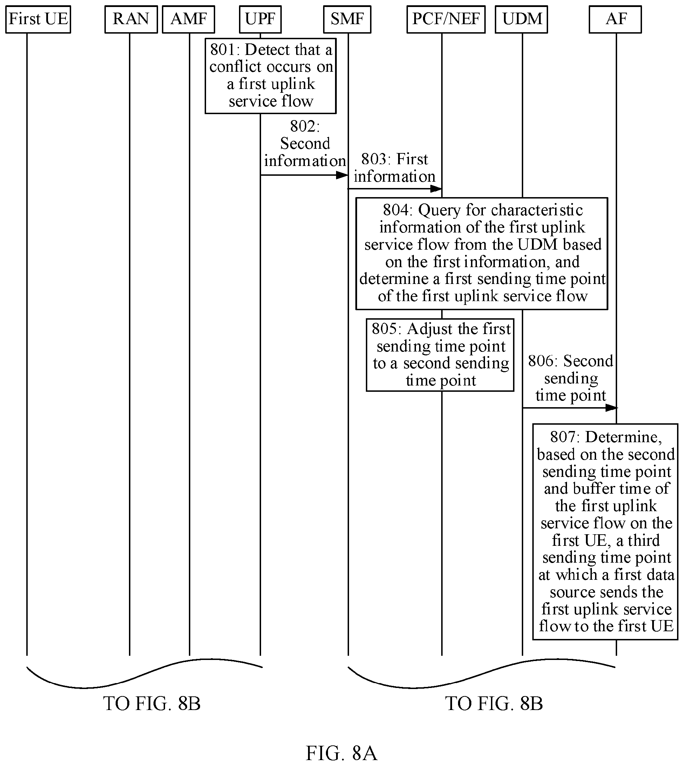

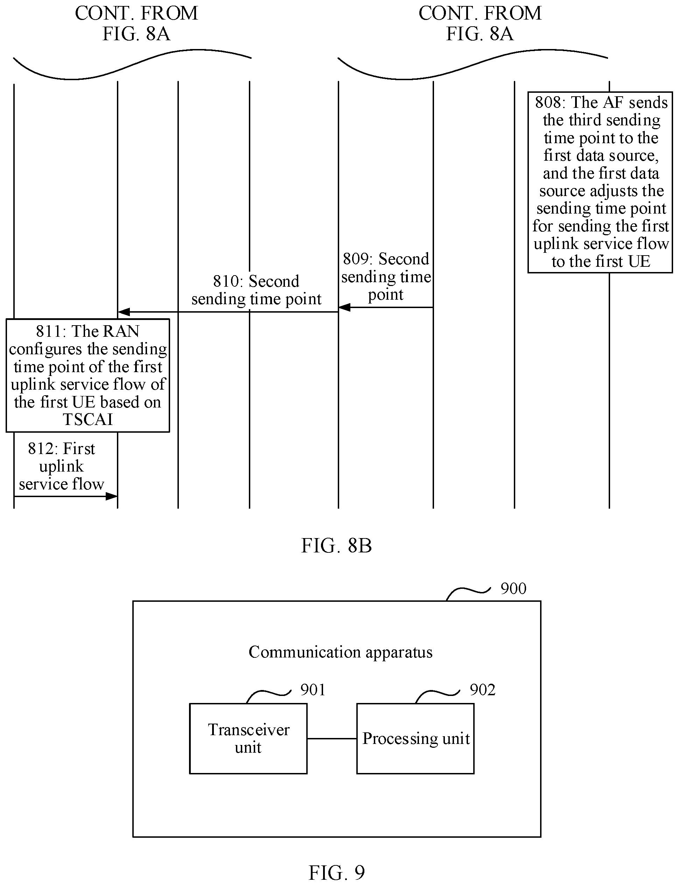

FIG. 8A and FIG. 8B show an example of a procedure of another communication method. An example in which a first terminal device is first UE, a first access network device is a RAN, a session management network element is an SMF, a user plane function network element is a UPF, a unified data management network element is a UDM, a second device is the UPF, and a first device is a PCF, a NEF, or an AF is used for description.

A specific procedure of the example may include the following steps.

Step 801: The UPF determines that a first time interval between a sending time point of a first uplink service flow of the first UE and a sending time point of a second uplink service flow of second UE is less than a first threshold.

This step may also be understood as that the UPF detects a conflict occurs on the first uplink service flow.

Specifically, the UPF may detect, in a manner such as DPI, whether a conflict occurs on the first uplink service flow, which causes delayed arrival. For example, when the first uplink service flow is a video flow, the UPF may obtain, by using the DPI, the sending time point that is of the first uplink service flow and that is carried in a packet payload part, and compare the sending time point with a time point at which a data packet of the first uplink service flow is currently received, to determine whether air interface congestion occurs in the packet and causes delayed arrival of the first uplink service flow. When the UPF determines that a difference between the sending time point of the first uplink service flow and a time point at which a first data packet of the first uplink service flow is currently received is greater than a second threshold, it indicates that a conflict occurs on the first uplink service flow, that is, the air interface congestion occurs. The UPF may further obtain an expected arrival time point of the first uplink service flow in advance. When the UPF determines that a difference between an actual receiving time point of the first uplink service flow and the expected arrival time point is greater than a third threshold, the UPF determines that the air interface congestion occurs.

For step 801, refer to related descriptions of step 400b in the embodiment shown in FIG. 4.

Step 802: The UPF sends second information to the SMF, where the second information indicates that the first time interval between the sending time point of the first uplink service flow of the first UE and the sending time point of the second uplink service flow of the second UE is less than the first threshold.

This step may also be understood that the UPF notifies the SMF that an air interface scheduling conflict exists.

For step 802, refer to related descriptions of step 401 in the embodiment shown in FIG. 4.

Specifically, the second information may include an identifier of the first UE; or the second information may include an identifier of the first UE and an identifier of the first uplink service flow.

Step 803: The SMF sends first information to the PCF/NEF, where the first information is used to request the PCF/NEF to reschedule the first uplink service flow.

For step 803, refer to related descriptions of step 402 in the embodiment shown in FIG. 4.

Specifically, the first information may include the identifier of the first UE, or include the identifier of the first UE and the identifier of the first uplink service flow.

Optionally, the first information may further include an identifier of the second UE, or include an identifier of the second UE and an identifier of the second uplink service flow.

The SMF may first determine the identifier of the second UE, or determine the identifier of the second UE and the identifier of the second uplink service flow, and then the SMF includes information about the second UE (that is, the identifier of the second UE, or the identifier of the second UE and the identifier of the second uplink service flow) in the first information.

Step 804: The PCF/NEF queries for characteristic information of the first uplink service flow from the UDM based on the first information, and determines a first sending time point of the first uplink service flow.

For step 804, refer to related descriptions of step 403 in the embodiment shown in FIG. 4.

Specifically, the characteristic information of the first uplink service flow may include the first sending time point of the first uplink service flow, a data size of the first uplink service flow, a sending periodicity of the first uplink service flow, or the like.

Step 805: The PCF/NEF adjusts the first sending time point to a second sending time point.

For step 805, refer to related descriptions of step 404 in the embodiment shown in FIG. 4.

Specifically, for a specific method for adjusting, by the PCF/NEF, the first sending time point to the second sending time point, refer to related descriptions of adjusting the first sending time point to the second sending time point by the first device in the embodiment shown in FIG. 4. Details are not described herein again.

Step 806: The PCF/NEF sends the second sending time point to the AF.

Step 807: The AF determines, based on the second sending time point and buffer time of the first uplink service flow on the first UE, a third sending time point at which a first data source sends the first uplink service flow to the first UE.

To be specific, the AF calculates, based on the buffer time from a time point at which the first UE receives the first uplink service flow to a time point at which the first UE is ready to send the first uplink service flow, the time point at which the first data source needs to send the first uplink service flow.

Step 808: The AF sends the third sending time point to the first data source.

After receiving the third sending time point, the first data source adjusts the sending time point for sending the first uplink service flow to the first UE, that is, adjusts the sending time point for sending the first uplink service flow to the first UE to the third sending time point.

Step 809: The PCF/NEF sends the second sending time point to the SMF.

Step 810: The SMF sends the second sending time point to the RAN.

For step 810, refer to related descriptions of step 406 in the embodiment shown in FIG. 4.

Specifically, the SMF may update TSCAI of the first uplink service flow based on the second sending time point, and send the updated TSCAI to the RAN, where the updated TSCAI includes the second sending time point. In this way, the RAN may know that the first sending time point is adjusted to the second sending time point, to allocate a resource in advance based on the second sending time point.

Step 811: The RAN configures the sending time point of the first uplink service flow of the first UE based on the TSCAI.

Step 812: The first UE receives, from the first data source, the first uplink service flow sent based on the third sending time point, and sends the first uplink service flow.

In this example, the UPF performs conflict detection (that is, determines that the first time interval between the first sending time point of the first uplink service flow of the first UE and the sending time point of the second uplink service flow of the second UE is less than the first threshold). After detecting a conflict, the UPF feeds back information about a conflicting service flow to the PCF/NEF. Finally, the PCF/NEF reschedules the first uplink service flow, and directly modifies, by using the AF, a sending time point of a first uplink service flow of a first source device externally connected to the first UE. For example, in a campus surveillance scenario, an I-frame sending time point of a camera can be modified through an external interface of the camera. In this way, an uplink scheduling conflict on an air interface can be avoided at a data source, and resource overheads on a UE side and RAN side can be reduced. In addition, an application is adjusted through an AF open interface, to avoid significant adjustment of an existing device, so that air interface scheduling can be ensured with minimum changes, and air interface capacity can be improved.

Based on the foregoing embodiments, an embodiment of this application further provides a communication apparatus. As shown in FIG. 9, the communication apparatus 900 may include a transceiver unit 901 and a processing unit 902. The transceiver unit 901 is configured to receive information, data, or the like, or send information, data, or the like by the communication apparatus 900. The processing unit 902 is configured to control and manage an action of the communication apparatus 900. The processing unit 902 may further control a step performed by the transceiver unit 901.

For example, the communication apparatus 900 may be specifically the first device (for example, the policy control function network element, the network exposure function network element, or the application function network element) in the foregoing embodiments, a processor in the first device, a chip, a chip system, a functional module, or the like. Alternatively, the communication apparatus 900 may be specifically the second device (for example, the user plane function network element, the first access network device, or the first terminal device), a processor in the second device, a chip, a functional module, or the like. Alternatively, the communication apparatus 900 may be specifically the session management network element in the foregoing embodiments, a processor of the session management network element, a chip, a chip system, a functional module, or the like. Alternatively, the communication apparatus 900 may be specifically the first terminal device in the foregoing embodiments, a processor of the first terminal device, a chip, a chip system, a functional module, or the like.

In an embodiment, when the communication apparatus 900 is configured to implement a function of the first device in the foregoing embodiments, details may be as follows:

The transceiver unit 901 is configured to receive first information from a session management network element, where the first information indicates that a first time interval between a sending time point of a first uplink service flow of a first terminal device and a sending time point of a second uplink service flow of a second terminal device is less than a first threshold. The processing unit 902 is configured to determine a first sending time point of the first uplink service flow of the first terminal device, and adjust the first sending time point to a second sending time point, where a second time interval between the second sending time point and the sending time point of the second uplink service flow of the second terminal device is greater than or equal to the first threshold. The transceiver unit 901 is further configured to send the second sending time point to the session management network element.

In an optional implementation, when determining the first sending time point of the first uplink service flow of the first terminal device, the processing unit 902 is specifically configured to query for characteristic information of the first uplink service flow from a unified data management network element based on the first information, where the characteristic information of the first uplink service flow includes the first sending time point.

For example, the first information includes an identifier of the first terminal device, or includes an identifier of the first terminal device and an identifier of the first uplink service flow, or includes an identifier of the first terminal device and an identifier of a first access network device, or includes an identifier of the first terminal device, an identifier of the first uplink service flow, and an identifier of a first access network device.

Specifically, when adjusting the first sending time point to the second sending time point, the processing unit 902 is specifically configured to: determine characteristic information of the second uplink service flow; and adjust the first sending time point to the second sending time point based on the characteristic information of the second uplink service flow.

For example, the characteristic information of the second uplink service flow includes at least one of the sending time point of the second uplink service flow, a data size of the second uplink service flow, or a sending periodicity of the second uplink service flow.

Optionally, when determining the characteristic information of the second uplink service flow, the processing unit 902 is specifically configured to: obtain the characteristic information of the first uplink service flow, where the characteristic information of the first uplink service flow includes at least one of the first sending time point, a data size of the first uplink service flow, or a sending periodicity of the first uplink service flow; and determine the characteristic information of the second uplink service flow based on the characteristic information of the first uplink service flow.

Specifically, when determining the characteristic information of the second uplink service flow, the processing unit 902 is specifically configured to determine the characteristic information of the second uplink service flow based on the first information, where the first information includes an identifier of the second terminal device.

Optionally, the first information further includes an identifier of the second uplink service flow.

In an optional implementation, when adjusting the first sending time point to the second sending time point based on the characteristic information of the second uplink service flow, the processing unit 902 is specifically configured to: calculate the second sending time point based on the characteristic information of the first uplink service flow and the characteristic information of the second uplink service flow; and adjust the first sending time point to the second sending time point.

For example, the processing unit 902 is further configured to: determine a third time interval between the first sending time point and the second sending time point; and determine a second packet delay budget PDB of the first uplink service flow based on the third time interval.

Specifically, when determining the second PDB of the first uplink service flow based on the third time interval, the processing unit 902 is specifically configured to subtract the third time interval from a first PDB of the first uplink service flow, to obtain the second PDB.

In an optional implementation, the transceiver unit 901 is further configured to send the second PDB to the session management network element.

In a possible implementation, the transceiver unit 901 is further configured to send the third time interval to the session management network element.

In an example, the first device is an application function network element, and the processing unit 902 is further configured to determine, based on the second sending time point and buffer time of the first uplink service flow on the first terminal device, a third sending time point at which a first data source sends the first uplink service flow to the first terminal device. The transceiver unit 901 is further configured to send the third sending time point to the first data source.

In another example, the first device is a policy control function network element or a network exposure function network element, and the transceiver unit 901 is further configured to send the second sending time point to an application function network element.

In another embodiment, when the communication apparatus 900 is configured to implement a function of the session management network element in the foregoing embodiments, details may be as follows:

The transceiver unit 901 is configured to: receive second information from a second device; send first information to a first device, where the first information and the second information indicate that a first time interval between a first sending time point of a first uplink service flow of a first terminal device and a sending time point of a second uplink service flow of a second terminal device is less than a first threshold; receive a second sending time point of the first uplink service flow from the first device, where a second time interval between the second sending time point and the sending time point of the second uplink service flow of the second terminal device is greater than or equal to the first threshold; and send the second sending time point to a first access network device. The processing unit 902 is configured to control the transceiver unit 901 to perform the foregoing receiving and sending operations.

For example, the second information includes an identifier of the first terminal device, and the first information includes the identifier of the first terminal device.

Optionally, the second information includes at least one of an identifier of the first uplink service flow or an identifier of the first access network device, and the first information includes at least one of the identifier of the first uplink service flow or the identifier of the first access network device.

Optionally, the second information includes an identifier of the second terminal device, and the first information includes the identifier of the second terminal device.

For example, the second information further includes an identifier of the second uplink service flow, and the first information further includes the identifier of the second uplink service flow.

In an optional implementation, the processing unit 902 is further configured to determine the second terminal device, and the first information further includes the identifier of the second terminal device.

Further, the processing unit 902 is further configured to determine the second uplink service flow, and the first information further includes the identifier of the second uplink service flow.

For example, the transceiver unit 901 is further configured to receive a second packet delay budget PDB from the first device, and the processing unit 902 is further configured to change a first PDB of the first uplink service flow to the second PDB.

Optionally, the transceiver unit 901 is further configured to: receive a third time interval from the first device, where the third time interval is a time interval between the first sending time point and the second sending time point; and send the third time interval to the first terminal device.

For example, the transceiver unit 901 is further configured to send the second sending time point to the first terminal device.

In another embodiment, when the communication apparatus 900 is configured to implement a function of the first terminal device in the foregoing embodiments, details may be as follows:

The processing unit 902 is configured to determine a first sending time point of a first uplink service flow. The transceiver unit 901 is configured to receive a third time interval from a session management network element. The processing unit 902 is further configured to add the first sending time point and the third time interval to obtain a second sending time point. The transceiver unit 901 is further configured to send the first uplink service flow based on the second sending time point.

In an optional implementation, the transceiver unit 901 is further configured to: after sending a first request to a first access network device, not receive a resource used to send the first uplink service flow, or not receive feedback information indicating that the first uplink service flow is successfully sent, or not receive the feedback information within preset duration; and send second information to the session management network element, where the second information indicates that the first terminal device does not send the first uplink service flow successfully.

For example, the second information includes an identifier of the first terminal device, or includes an identifier of the first terminal device and an identifier of the first uplink service flow, or includes an identifier of the first terminal device and an identifier of the first access network device, or includes an identifier of the first terminal device, an identifier of the first uplink service flow, and an identifier of the first access network device.

In another embodiment, when the communication apparatus 900 is configured to implement a function of the second device in the foregoing embodiments, details may be as follows:

The processing unit 902 is configured to determine that a first time interval between a sending time point of a first uplink service flow of a first terminal device and a sending time point of a second uplink service flow of a second terminal device is less than a first threshold. The transceiver unit 901 is configured to send second information to a session management network element, where the second information indicates that the first time interval between the sending time point of the first uplink service flow of the first terminal device and the sending time point of the second uplink service flow of the second terminal device is less than the first threshold.

In an optional implementation, the second device is a first access network device, and when determining that the first time interval between the sending time point of the first uplink service flow of the first terminal device and the sending time point of the second uplink service flow of the second terminal device is less than the first threshold, the processing unit 902 is specifically configured to: after the transceiver unit 901 receives a first scheduling request from the first terminal device, determine that a resource cannot be allocated to the first uplink service flow, or determine that the first uplink service flow of the first terminal device is not received in a currently allocated uplink slot; and determine that the first time interval between the sending time point of the first uplink service flow of the first terminal device and the sending time point of the second uplink service flow of the second terminal device is less than the first threshold.

Optionally, the second information includes an identifier of the first terminal device; or the second information includes an identifier of the first terminal device and an identifier of the first uplink service flow; or the second information includes an identifier of the first terminal device and an identifier of the first access network device; or the second information includes an identifier of the first terminal device, an identifier of the first uplink service flow, and an identifier of the first access network device.

For example, the second information further includes an identifier of the second terminal device, or the second information further includes an identifier of the second terminal device and an identifier of the second uplink service flow.

In another optional implementation, the second device is a user plane function network element, and when determining that the first time interval between the sending time point of the first uplink service flow of the first terminal device and the sending time point of the second uplink service flow of the second terminal device is less than the first threshold, the processing unit 902 is specifically configured to: obtain the sending time point of the first uplink service flow, and determine that a difference between the sending time point of the first uplink service flow and a time point at which the transceiver unit 901 currently receives a first data packet of the first uplink service flow is greater than a second threshold; or obtain an expected arrival time point of the first uplink service flow, and determine that a difference between the expected arrival time point and a time point at which the transceiver unit 901 currently receives the first uplink service flow is greater than a third threshold; and determine that the first time interval between the sending time point of the first uplink service flow of the first terminal device and the sending time point of the second uplink service flow of the second terminal device is less than the first threshold.

Optionally, the second information includes the identifier of the first terminal device; or the second information includes the identifier of the first terminal device and the identifier of the first uplink service flow.

It should be noted that, in embodiments of this application, division into the units is an example, and is merely logical function division. During actual implementation, another division manner may be used. Functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

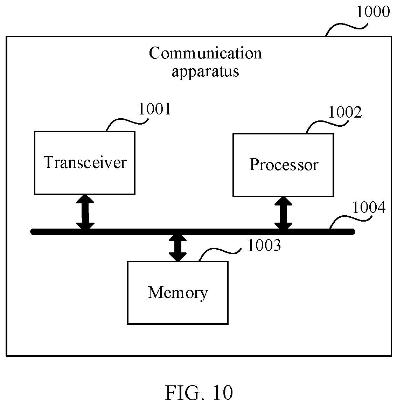

Based on the foregoing embodiments, an embodiment of this application further provides a communication apparatus. As shown in FIG. 10, the communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send information, a signal, data, or the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 1001, the processor 1002, and the memory 1003 are connected to each other. Optionally, the transceiver 1001, the processor 1002, and the memory 1003 are connected to each other through a bus 1004. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, to implement a function of the communication apparatus 1000.

For example, the communication apparatus 1000 may be the first device (for example, the policy control function network element, the network exposure function network element, or the application function network element) in the foregoing embodiments, or may be the second device (for example, the user plane function network element, the first access network device, or the first terminal device) in the foregoing embodiments, or may be the session management network element in the foregoing embodiments, or may be the first terminal device in the foregoing embodiments.

In an embodiment, when the communication apparatus 1000 implements a function of the first device in the foregoing embodiments, the transceiver 1001 may implement a receiving and sending operation performed by the first device in the foregoing embodiments, and the processor 1002 may implement another operation other than the receiving and sending operation performed by the first device in the foregoing embodiments. For detailed related descriptions, refer to related descriptions in the foregoing embodiments. Details are not described herein again.

In another embodiment, when the communication apparatus 1000 implements a function of the second device in the foregoing embodiments, the transceiver 1001 may implement a receiving and sending operation performed by the second device in the foregoing embodiments, and the processor 1002 may implement another operation other than the receiving and sending operation performed by the second device in the foregoing embodiments. For detailed related descriptions, refer to related descriptions in the foregoing embodiments. Details are not described herein again.

In another embodiment, when the communication apparatus 1000 implements a function of the session management network element in the foregoing embodiments, the transceiver 1001 may implement a sending and receiving operation performed by the session management network element in the foregoing embodiments, and the processor 1002 may implement another operation other than the sending and receiving operation performed by the session management network element in the foregoing embodiments. For detailed related descriptions, refer to related descriptions in the foregoing embodiments. Details are not described herein again.

In another embodiment, when the communication apparatus 1000 implements a function of the first terminal device in the foregoing embodiments, the transceiver 1001 may implement a receiving and sending operation performed by the first terminal device in the foregoing embodiments, and the processor 1002 may implement another operation other than the receiving and sending operation performed by the first terminal device in the foregoing embodiments. For detailed related descriptions, refer to related descriptions in the foregoing embodiments. Details are not described herein again.

Based on the foregoing embodiments, an embodiment of this application provides a communication system. The communication system may include the first device, the second device, the session management network element, the first terminal device, and the like in the foregoing embodiments.

An embodiment of this application further provides a computer-readable storage medium. The computer-readable storage medium is configured to store a computer program. When the computer program is executed by a computer, the computer may implement the communication methods provided in the foregoing method embodiments.

An embodiment of this application further provides a computer program product. The computer program product is configured to store a computer program. When the computer program is executed by a computer, the computer may implement the communication methods provided in the foregoing method embodiments.

An embodiment of this application further provides a chip system. The chip system includes at least one processor and a communication interface. The communication interface is configured to send and/or receive a signal. The at least one processor is configured to invoke a computer program stored in at least one memory, so that the chip system implements the communication methods provided in the foregoing method embodiments.

An embodiment of this application further provides a chip, including a processor. The processor is coupled to a memory, and is configured to invoke a program in the memory, so that the chip implements the communication methods provided in the foregoing method embodiments.

An embodiment of this application further provides a chip. The chip is coupled to a memory, and the chip is configured to implement the communication methods provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a first device, first information from a session management network element, wherein the first information indicates that a first time interval between a sending time point of a first uplink service flow of a first terminal device and a sending time point of a second uplink service flow of a second terminal device is less than a first threshold;
determining, by the first device, a first sending time point of the first uplink service flow of the first terminal device;
adjusting, by the first device, the first sending time point to a second sending time point, wherein a second time interval between the second sending time point and the sending time point of the second uplink service flow of the second terminal device is greater than or equal to the first threshold; and
sending, by the first device, the second sending time point to the session management network element.

2. The method according to claim 1, wherein the determining, by the first device, a first sending time point of the first uplink service flow of the first terminal device comprises:
querying, by the first device, for characteristic information of the first uplink service flow from a unified data management network element based on the first information, wherein the characteristic information of the first uplink service flow comprises the first sending time point.

3. The method according to claim 2, wherein the first information comprises an identifier of the first terminal device, or comprises an identifier of the first terminal device and an identifier of the first uplink service flow, or comprises an identifier of the first terminal device and an identifier of a first access network device, or comprises an identifier of the first terminal device, an identifier of the first uplink service flow, and an identifier of a first access network device.

4. The method according to any one of claims 1 to 3, wherein the adjusting, by the first device, the first sending time point to a second sending time point comprises:
determining, by the first device, characteristic information of the second uplink service flow; and
adjusting, by the first device, the first sending time point to the second sending time point based on the characteristic information of the second uplink service flow.

5. The method according to claim 4, wherein the characteristic information of the second uplink service flow comprises at least one of the sending time point of the second uplink service flow, a data size of the second uplink service flow, or a sending periodicity of the second uplink service flow.

6. The method according to claim 4 or 5, wherein the determining, by the first device, characteristic information of the second uplink service flow comprises:
obtaining, by the first device, the characteristic information of the first uplink service flow, wherein the characteristic information of the first uplink service flow comprises at least one of the first sending time point, a data size of the first uplink service flow, or a sending periodicity of the first uplink service flow; and
determining, by the first device, the characteristic information of the second uplink service flow based on the characteristic information of the first uplink service flow.

7. The method according to any one of claims 4 to 6, wherein the determining, by the first device, characteristic information of the second uplink service flow comprises:
comprising, by the first information, an identifier of the second terminal device, and determining, by the first device, the characteristic information of the second uplink service flow based on the first information.

8. The method according to claim 7, wherein the first information further comprises an identifier of the second uplink service flow.

9. The method according to any one of claims 4 to 8, wherein the adjusting, by the first device, the first sending time point to the second sending time point based on the characteristic information of the second uplink service flow comprises:
calculating, by the first device, the second sending time point based on the characteristic information of the first uplink service flow and the characteristic information of the second uplink service flow; and
adjusting, by the first device, the first sending time point to the second sending time point.

10. The method according to any one of claims 1 to 9, further comprising:
determining, by the first device, a third time interval between the first sending time point and the second sending time point; and
determining, by the first device, a second packet delay budget PDB of the first uplink service flow based on the third time interval.

11. The method according to claim 10, wherein the determining, by the first device, a second PDB of the first uplink service flow based on the third time interval comprises:
subtracting, by the first device, the third time interval from a first PDB of the first uplink service flow, to obtain the second PDB.

12. The method according to claim 11, further comprising:
sending, by the first device, the second PDB to the session management network element.

13. The method according to any one of claims 10 to 12, further comprising:
sending, by the first device, the third time interval to the session management network element.

14. The method according to any one of claims 1 to 9, wherein the first device is an application function network element, and the method further comprises:
determining, by the first device based on the second sending time point and buffer time of the first uplink service flow on the first terminal device, a third sending time point at which a first data source sends the first uplink service flow to the first terminal device; and
sending, by the first device, the third sending time point to the first data source.

15. The method according to any one of claims 1 to 9, wherein the first device is a policy control function network element or a network exposure function network element, and the method further comprises:
sending, by the first device, the second sending time point to an application function network element.

16. A communication method, wherein the method comprises:
receiving, by a session management network element, second information from a second device;
sending, by the session management network element, first information to a first device, wherein the first information and the second information indicate that a first time interval between a first sending time point of a first uplink service flow of a first terminal device and a sending time point of a second uplink service flow of a second terminal device is less than a first threshold;
receiving, by the session management network element, a second sending time point of the first uplink service flow from the first device, wherein a second time interval between the second sending time point and the sending time point of the second uplink service flow of the second terminal device is greater than or equal to the first threshold; and
sending, by the session management network element, the second sending time point to a first access network device.

17. The method according to claim 16, wherein the second information comprises an identifier of the first terminal device, and the first information comprises the identifier of the first terminal device.

18. The method according to claim 17, wherein the second information further comprises at least one of an identifier of the first uplink service flow or an identifier of the first access network device, and the first information further comprises at least one of the identifier of the first uplink service flow or the identifier of the first access network device.

19. The method according to claim 17 or 18, wherein the second information further comprises an identifier of the second terminal device, and the first information further comprises the identifier of the second terminal device.

20. The method according to claim 19, wherein the second information further comprises an identifier of the second uplink service flow, and the first information further comprises the identifier of the second uplink service flow.

21. The method according to claim 17 or 18, further comprising:
determining, by the session management network element, the second terminal device, wherein the first information further comprises an identifier of the second terminal device.

22. The method according to claim 21, further comprising:
determining, by the session management network element, the second uplink service flow, wherein the first information further comprises an identifier of the second uplink service flow.

23. The method according to any one of claims 16 to 22, further comprising:
receiving, by the session management network element, a second packet delay budget PDB from the first device; and
modifying, by the session management network element, a first PDB of the first uplink service flow to the second PDB.

24. The method according to any one of claims 16 to 23, further comprising:
receiving, by the session management network element, a third time interval from the first device, wherein the third time interval is a time interval between the first sending time point and the second sending time point; and
sending, by the session management network element, the third time interval to the first terminal device.

25. The method according to any one of claims 16 to 23, further comprising:
sending, by the session management network element, the second sending time point to the first terminal device.

26. A communication apparatus, comprising a processor and a transceiver, wherein
the transceiver is configured to receive and/or send information; and
the processor is coupled to a memory, and is configured to invoke computer instructions in the memory, to enable the first device to perform the method according to any one of claims 1 to 15.

27. A communication apparatus, comprising a processor and a transceiver, wherein
the transceiver is configured to receive and/or send information; and
the processor is coupled to a memory, and is configured to invoke computer instructions in the memory, to enable the first device to perform the method according to any one of claims 16 to 25.

28. A communication system, wherein the communication system comprises the communication apparatus according to claim 26 and the communication apparatus according to claim 27.

29. A computer-readable storage medium, wherein the computer-readable storage medium stores a computer program or instructions, and when the computer program or the instructions are executed by a communication apparatus, the method according to any one of claims 1 to 25 is implemented.

30. A computer program product comprising instructions, wherein when the computer program product runs on a communication apparatus, the communication apparatus is enabled to perform the method according to any one of claims 1 to 25.
